# EUROPEAN PATENT APPLICATION

(11) **EP 4 517 985 A1**
(43) Date of publication of application: **05.03.2025**
(21) Application number: 22947209.7
(22) Date of filing: 21.06.2022
(51) Int. Cl.: H01M 50/30, H01M 50/249, H01M 50/258, H01M 50/262

(54) **BATTERY CELL, BATTERY AND ELECTRIC DEVICE**

(71) Applicant: Contemporary Amperex Technology (Hong Kong) Limited, Hong Kong (HK)
(72) Inventor: SU, Huasheng, Ningde, Fujian 352100 (CN); XING, Chengyou, Ningde, Fujian 352100 (CN); DU, Xianglong, Ningde, Fujian 352100 (CN); LI, Quankun, Ningde, Fujian 352100 (CN); ZHUO, Weirong, Ningde, Fujian 352100 (CN); WANG, Peng, Ningde, Fujian 352100 (CN)
(74) Representative: Gong, Jinping
(86) International application number: PCT/CN2022/100171
(87) International publication number: WO 2023/245429

(57) **Abstract**

The present disclosure provides a battery cell, a battery and an electrical equipment. The battery cell includes: a shell, including a first wall; an electrode assembly, arranged inside the shell; an electric energy extraction part, arranged inside the shell and connected to the electrode assembly; a pressure relief mechanism, arranged on the first wall; and a support member, arranged inside the shell, wherein the support member is configured to limit the electric energy extraction part from blocking the pressure relief hole formed by the pressure relief mechanism in the event of thermal runaway of the battery cell. The support member of the technical solution of the present disclosure can avoid the problem of the battery cell that is not able to smoothly exhaust and release pressure due to electric energy extraction part blocking the pressure relief hole formed by the pressure relief mechanism during the thermal runaway of the battery cell, thereby reducing the risk of fire and explosion caused by poor pressure relief during the thermal runaway of the battery cell, and effectively improving the safety performance of the battery cell.

## Description

### Technical Field

The present disclosure relates to the field of battery, in particular to a battery cell, a battery, and an electrical equipment.

### Background Art

Energy conservation and emission reduction are key to the sustainable development of the automotive industry, and electric vehicles have become an important component of the sustainable development of the automotive industry due to their advantages in energy conservation and environmental protection. For electric vehicles, battery technology is an important factor related to their development.

**In** battery technology, how to improve the safety performance of batteries is an urgent problem to be solved.

### Summary

The present disclosure provides a battery cell, a battery, and an electrical equipment, which can effectively improve the safety performance of the battery cell.

In the first aspect, the present disclosure provides a battery cell, including: a shell, including a first wall; an electrode assembly, arranged inside the shell; an electric energy extraction part, arranged inside the shell and connected to the electrode assembly; a pressure relief mechanism, arranged on the first wall; and a support member, arranged inside the shell, wherein the support member is configured to limit the electric energy extraction part from blocking the pressure relief hole formed by the pressure relief mechanism in the event of thermal runaway of the battery cell.

The battery cell in the technical solution of the present disclosure is equipped with a support member inside the shell. When the battery cell experiences thermal runaway, the high-temperature and high-pressure gas generated inside the shell pushes towards the direction of the pressure relief mechanism, which causes the pressure relief mechanism to execute actions or be damaged, thereby forming a pressure relief hole that can be used for internal pressure or temperature relief. However, the electric energy extraction part located inside the shell is prone to deformation and blocking the pressure relief hole of the pressure relief mechanism due to heating and stress. The support member installed inside the shell of the present disclosure can effectively limit the deformed or moved electric energy extraction part from blocking the pressure relief hole, so as to avoid the problem of the battery cell being unable to smoothly exhaust and release pressure due to the blocking of the pressure relief hole of the pressure relief mechanism by the electric energy extraction part, thereby reducing the risk of fire and explosion caused by poor pressure relief during thermal runaway of the battery cell, and effectively improving the safety performance of the battery cell.

According to some embodiments of the present disclosure, the melting point of the support member is higher than 200 °C.

In the above technical solution, the melting point of the support member is higher than 200 °C to effectively reduce the impact of high-temperature and high-pressure gas on the structural stability of the support member, thereby effectively ensuring the performance stability of the support member.

According to some embodiments of the present disclosure, the support member is a metal component.

In the above technical solution, the support member is a metal component, and the metal support member has higher structural strength, thereby effectively ensuring the blocking and limiting effect of the support member on the electric energy extraction part. At the same time, the metal support member has a higher melting point, which can effectively ensure the structural stability of the support member in high temperature environments.

According to some embodiments of the present disclosure, the battery cell further includes: an insulating member, at least partially arranged between the first wall and the electric energy extraction part for insulation and isolation of the first wall from the electric energy extraction part, wherein the melting point of the support member is higher than that of the insulating member, and the support member is configured to limit the electric energy extraction part from blocking the pressure relief hole formed by the pressure relief mechanism in the event of thermal runaway of the battery cell after the insulating member melts.

In the above technical solution, an insulating member is installed inside the battery cell. Under a normal use state, the insulating member insulates and isolates the first wall and the electric energy extraction part to avoid short circuit abnormalities in the battery cell. When the thermal runaway of the battery cell occurs, the insulating member is prone to melting due to the high temperature, so as to lose its ability to limit the electric energy extraction part. The setting of the support member facilitates limiting the electric energy extraction part after the insulating member melts, so as to limit the deformed and moved electric energy extraction part from blocking the pressure relief hole of the pressure relief mechanism.

According to some embodiments of the present disclosure, the support member is fixed to the first wall.

In the above technical solution, the support member is fixed to the first wall to stabilize the support member in the battery cell, which is convenient for improving the connection stability of the support member, thereby improving the force stability of the support member.

According to some embodiments of the present disclosure, the support member and the first wall are integrally formed.

In the above technical solution, the support member and the first wall are integrally formed, which facilitates manufacturing and assembly while effectively ensuring the structural strength of the support member.

According to some embodiments of the present disclosure, the support member is arranged around the pressure relief mechanism.

In the above technical solution, the support member is arranged around the pressure relief mechanism to form stable support around the pressure relief mechanism, thereby further improving the stability of the support member to support and limit the electric energy extraction part.

According to some embodiments of the present disclosure, the support member includes multiple sub support members, which are arranged around the pressure relief mechanism.

In the above technical solution, the support member includes multiple sub support members, which are arranged around the pressure relief mechanism. The multiple sub support members can support the electric energy extraction part from multiple positions, and an exhaust channel communicated with the pressure relief mechanism can be formed between two adjacent sub support members, so as to enable the high-temperature and high-pressure gas to pass through the exhaust channel and to be discharged through the pressure relief mechanism.

According to some embodiments of the present disclosure, the support member is covered on the pressure relief mechanism, and the support member has an exhaust channel communicating the internal space of the support member with the external space of the support member.

In the above technical solution, the support member is covered on the pressure relief mechanism, which provides protection, similar to the protective cover, to the pressure relief mechanism. On the one hand, it can effectively ensure the structural strength of the support member itself, thereby efficiently ensuring the stability of the support member under stress. On the other hand, the support member covers the pressure relief mechanism, which can fully limit the electric energy extraction part from blocking the pressure relief hole of the battery cell. The support member is equipped with the exhaust channel communicating the internal and external spaces of the support member, to ensure that in the event of thermal runaway of the battery cell, the gas inside the battery cell can smoothly pass through the exhaust channel and reach the pressure relief mechanism, thereby ensuring smooth pressure relief of the pressure relief mechanism.

According to some embodiments of the present disclosure, the support member includes a first bottom wall and a first side wall, wherein the first bottom wall and the pressure relief mechanism are arranged oppositely to each other along the thickness direction of the first wall, and a gap is formed between the first bottom wall and the pressure relief mechanism. The first side wall connects the first bottom wall and the first wall, and the exhaust channel is formed on the first side wall.

In the above technical solution, the first bottom wall is arranged oppositely to the first wall, thereby creating a gap between the first bottom wall and the pressure relief mechanism. The first bottom wall faces the electrode assembly to limit the electric energy extraction part from blocking the pressure relief mechanism. At the same time, the exhaust channel is formed on the first side wall, which can effectively reduce the risk of the exhaust channel being blocked by the electric energy extraction part and ensure the smoothness of pressure relief of the pressure relief mechanism.

According to some embodiments of the present disclosure, the battery cell further includes: an electrode extraction part, arranged on the first wall, wherein the electric energy extraction part includes an adapter and a tab, the tab is connected to the electrode assembly, the adapter is arranged between the first wall and the electrode assembly, the tab and the electrode extraction part are electrically connected through the adapter, and the support member is configured to limit the adapter from blocking the pressure relief hole formed by the pressure relief mechanism in the event of thermal runaway of the battery cell.

In the above technical solution, the electric energy extraction part includes an adapter and a tab. The tab and the electrode assembly can be formed integrally or connected by welding or other methods. The adapter connects the tab and the electrode extraction part. When the battery cell experiences thermal runaway, the tab connected to the electrode assembly is prone to deformation due to the impact of high-temperature and high-pressure gas, which drives the adapter to deform and approach the pressure relief mechanism on the first wall. The deformed adapter can easily block the pressure relief hole formed by the pressure relief mechanism, thereby causing airflow to be blocked at the pressure relief mechanism and unable to discharge from the battery cell in a timely manner. The support member can limit the adapter from blocking the pressure relief hole of the pressure relief mechanism, thereby avoiding the problem of the adapter blocking the pressure relief hole due to deformation, effectively ensuring the smoothness and timeliness of exhaust when the battery cell experiences thermal runaway, and reducing the risk of battery cell explosion, so as to effectively improve the safety performance of battery cells.

According to some embodiments of the present disclosure, the adapter includes a reinforcing part, wherein the projection of the reinforcing part on the first wall overlaps at least partially with the projection of the support member on the first wall along the thickness direction of the first wall.

In the above technical solution, the adapter is equipped with a reinforcing part, which increases the structural strength of the adapter. When the battery cell experiences thermal runaway, the difficulty of deformation of the adapter increases, thereby reducing the risk of the adapter blocking the pressure relief hole. At the same time, since the projection of the reinforcing part on the first wall overlaps at least partially with that of the support member on the first wall, when the battery cell experiences thermal runaway, the reinforcing part on the adapter can at least partially abut against the support member, and the support member limits the adapter, so as to efficiently limit it from blocking the pressure relief hole, thereby ensuring that the pressure relief mechanism can release pressure normally, and making the battery cell have higher safety.

According to some embodiments of the present disclosure, the adapter includes a first connection section and a second connection section, wherein the first connection section is connected to the tab, the second connection section is electrically connected to the electrode extraction part, and the reinforcing part is arranged at the first connection section.

In the above technical solution, the adapter includes a first connection section and a second connection section, with the first connection section connected to the tab. When the battery cell experiences thermal runaway, the deformation of the tab will lead to a tendency for the first connection section to approach the first wall. Therefore, the reinforcing part is set at the first connection section, which can effectively increase the deformation difficulty of the first connection section and ultimately abut against the support member to limit the first connection section from blocking the pressure relief hole of the pressure relief mechanism.

According to some embodiments of the present disclosure, the reinforcing part is a first flanging part connected to the edge of the first connection section. The first connection section has a first surface facing the first wall and a second surface facing away from the first wall, and the first flanging part is bent to one side of the first surface or to one side of the second surface.

In the above technical solution, the reinforcing part is the first flanging part. The first flanging part is bent to one side of the third surface or the first flanging part is bent to one side of the first surface for easy processing and molding, thereby ensuring that the strength of the first connection section in the reinforcing part is greater than that of other parts of the first connection section.

According to some embodiments of the present disclosure, the first connection section has a first surface facing the first wall and a second surface facing away from the first wall, with the first or second surface forming a protrusion, which is the reinforcing part.

In the above technical solution, the reinforcing part is a protrusion set on the adapter, which is convenient for manufacturing and processing, and effectively ensures the structural strength of the reinforcing part.

According to some embodiments of the present disclosure, the reinforcing part is located on the side of the first connection section facing the first wall.

In the above technical solution, the reinforcing part is located on the side facing the first wall of the first connection section, thereby creating an exhaust gap between the support member and the reinforcing part. This exhaust gap can communicate the pressure relief hole and the inside of the battery cell when the battery cell undergoes thermal runaway, thereby effectively avoiding the reinforcing part from occupying the connection area between the first connection section and the tab, and avoiding interference with the connection between the adapter and the tab.

According to some embodiments of the present disclosure, the battery cell further includes: an insulating member, at least partially arranged between the first wall and the electric energy extraction part for insulation and isolation of the first wall from the electric energy extraction part, wherein the insulating member includes a third surface facing the first wall, on which a groove is formed, and at least a portion of the support member is accommodated within the groove.

In the above technical solution, the insulating member is used to insulate and isolate the first wall and the electric energy extraction part to avoid short circuits by contact between the first wall and the electric energy extraction part. The setting of the groove ensures the insulation effect between the first wall and the electric energy extraction part, while avoiding the support member from occupying too much internal space of the battery cell, thereby effectively ensuring the energy density of the battery cell.

According to some embodiments of the present disclosure, the battery cell further includes: an electrode extraction part, arranged on the first wall, wherein the electric energy extraction part includes an adapter and a tab, the adapter is arranged between the first wall and the electrode assembly, the tab is connected to the electrode assembly, and the tab and the electrode extraction part are electrically connected through the adapter, wherein the support member is arranged on the adapter, and the support member is configured to limit the adapter from blocking the pressure relief hole formed by the pressure relief mechanism in the event of thermal runaway of the battery cell.

In the above technical solution, the electric energy extraction part includes an adapter and a tab. The tab and the electrode assembly can be formed integrally or connected by welding or other methods. The adapter connects the tab and the electrode extraction part. When the battery cell experiences thermal runaway, the tab connected to the electrode assembly is prone to deformation due to the impact of high-temperature and high-pressure gas, which drives the adapter to deform and approach the pressure relief mechanism on the first wall. The deformed adapter can easily block the pressure relief hole of the pressure relief mechanism, thereby causing airflow to be blocked at the pressure relief mechanism and unable to discharge from the battery cell in a timely manner. The support member can limit the adapter from blocking the pressure relief hole formed by the pressure relief mechanism when the battery cell undergoes thermal runaway, thereby avoiding the problem of the adapter blocking the pressure relief hole due to deformation, effectively ensuring the smoothness and timeliness of exhaust when the battery cell experiences thermal runaway, and reducing the risk of battery cell explosion, so as to effectively improve the safety performance of battery cells. At the same time, the support member is set on the adapter. On the one hand, the support member itself can increase the structural strength of the adapter, thereby improving the structural strength of the adapter and increasing the difficulty of deformation of the adapter in the event of thermal runaway of the battery cell. On the other hand, setting the support member on the adapter can effectively reduce the space occupation rate of the support member, which is conducive to improving the safety performance of the battery cell while increasing the energy density of the battery cell.

According to some embodiments of the present disclosure, the adapter includes a first connection section and a second connection section, wherein the first connection section is connected to the tab, the second connection section is connected to the electrode extraction part, and the support member is arranged at the first connection section.

In the above technical solution, the adapter includes a first connection section and a second connection section, with the first connection section connected to the tab. When the battery cell experiences thermal runaway, the deformation of the tab will lead to a tendency for the first connection section to approach the first wall. The deformation of the first connection section can easily block the pressure relief hole formed by the pressure relief mechanism when the battery cell experiences thermal runaway. Therefore, setting the support member in the first connection section can effectively increase the deformation difficulty of the first connection section. Moreover, after the deformation of the first connection section occurs, the support member can limit the first connection section from blocking the pressure relief hole formed by the pressure relief mechanism when the battery cell experiences thermal runaway.

According to some embodiments of the present disclosure, the first connection section has a first surface facing the first wall and a second surface facing away from the first wall. The support member forms a concave part on the first surface, and a convex part at a position corresponding to the concave part on the second surface. Along the thickness direction of the first wall, the projection of the concave part on the first wall covers at least a part of the pressure relief mechanism.

In the above technical solution, the support member is formed on the first connection section, and a concave part is formed on the first surface and a convex part is formed on the second surface. The projection of the concave part on the first wall at least partially covers the pressure relief mechanism. The support member of this structure effectively improves the structural strength of the first connection section and increases the deformation difficulty of the first connection section. At the same time, when the first connection section deforms towards the first wall, The concave part on the first connection section can maintain a certain gap between the pressure relief mechanism and the first connection section, so as to avoid the first connection section from blocking the pressure relief hole in case of thermal runaway of the battery cell, and achieve the goal of ensuring smooth pressure relief of the pressure relief mechanism.

According to some embodiments of the present disclosure, the concave part extends to the edge of the first connection section.

In the above technical solution, the concave part extends to the edge of the first connection section, thereby making the space of the concave part directly communicate with the space outside the edge of the first connection section. After the thermal runaway of the battery cell occurs, gas can directly enter the concave part through the edge of the first connection section and reach the pressure relief mechanism, thereby ensuring the smooth flow of gas.

According to some embodiments of the present disclosure, the battery cell further comprises a reinforcer, with at least a portion of the reinforcer arranged in the concave part.

In the above technical solution, at least a portion of the reinforcer is arranged in the concave part, which can improve the structural strength of the support member and further improve the structural stability after the concave part is subjected to force.

According to some embodiments of the present disclosure, the reinforcer includes a second bottom wall and a second side wall, wherein the second bottom wall adheres to the bottom surface of the concave part, the second side wall is formed at the edge of the second bottom wall, and the second side wall adheres to the side surface of the concave part.

In the above technical solution, the second bottom wall of the reinforcer is attached to the bottom surface of the concave part, and the second side wall of the reinforcer is attached to the side surface of the concave part, which enables the reinforcer to provide sufficient profiling support for the concave part, thereby effectively improving the overall structural strength of the support member, and effectively enhancing the stress stability of the support member.

According to some embodiments of the present disclosure, the reinforcer further includes a second flanging part, wherein the second flanging part is connected to the second side wall, and the second flanging part is located outside the concave part and is attached to the first surface.

In the above technical solution, the reinforcer includes a flanging part that is attached to the first surface. The design of the flanging part not only improves the connection stability and stress stability between the reinforcer itself and the tab adapter, but also plays a supporting and strengthening role on the first connection section. In the event of thermal runaway of the battery cell, the reinforcer can further increase the difficulty of deformation of the first connection section and improve the overall stress stability of the first connection section.

According to some embodiments of the present disclosure, the first connection section includes a main body area and a connecting area, the connecting area is connected to the tab, the convex part is formed at the main body area, the connecting area protrudes from the second surface, and the height of the convex part protruding from the second surface is less than or equal to the height of the connecting area protruding from the second surface.

In the above technical solution, the convex part is formed in the main body area by connecting the connecting area with the tab, so as to avoid the convex part affecting the connection area between the connecting area and the tab. The height of the convex part protruding from the second surface is less than or equal to the height of the connecting area protruding from the second surface. The convex part occupies less space in the thickness direction, thereby ensuring the strength of the support member and avoiding affecting the connection between the connecting area and the tab.

In the second aspect, the present disclosure provides a battery, including a battery cell as described in any of the above solutions.

In the third aspect, the present disclosure also provides an electrical equipment, including a battery cell described in any of the above solutions, which is used to provide electrical energy.

### Brief Description of Drawings

In order to more clearly illustrate technical solutions of embodiments of the present disclosure, drawings required for use in the embodiments of the present disclosure will be described briefly below. It is obvious that the drawings in the following description are merely illustrative of some embodiments of the present disclosure. It will be understood by those of ordinary skill in the art that other drawings can also be obtained according to the drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is an exploded view of the battery cell provided in some embodiments of the present disclosure;
FIG. 4 is an exploded view of the first wall, the adapter and the insulating member of the battery cell provided in some embodiments of the present disclosure;
FIG. 5 is a sectional view of the first wall and the support member when the battery cell undergoes the thermal runaway provided in some embodiments of the present disclosure;
FIG. 6 is an exploded view of the first wall, the insulating member and the support member of the battery cell provided in some other embodiments of the present disclosure;
FIG. 7 is a sectional view of the first wall and the support member provided in some other embodiments of the present disclosure;
FIG. 8 is a schematic view of the structure of the adapter with the reinforcing part provided in some embodiments of the present disclosure;
FIG. 9 is a schematic diagram of the structure of the first flanging part in the unfolded state on the adapter provided in some embodiments of the present disclosure;
FIG. 10 is a schematic diagram of the structure of the first flanging part in the folded state on the adapter provided in some embodiments of the present disclosure;
FIG. 11 is a locally sectional view of the battery cell provided in some embodiments of the present disclosure;
FIG. 12 is a sectional view of the fitting relationship between the insulating member and the support member provided in some embodiments of the present disclosure;
FIG. 13 is a sectional view of the fitting relationship between the insulating member and the support member provided in some other embodiments of the present disclosure;
FIG. 14 is a schematic view of the structure of the unfolded adapter provided in some embodiments of the present disclosure;
FIG. 15 is an axonometric view of the adapter provided in some embodiments of the present disclosure after being assembled onto the battery cell;
FIG. 16 is a schematic view of the fitting structure of the adapter and reinforcer provided in some embodiments of the present disclosure; and
FIG. 17 shows the main view of the fitting structure of the adapter and reinforcer provided in some embodiments of the present disclosure.

In the attached drawings, they are not drawn to the actual scale.

Reference signs: 1000-vehicle; 100-battery; 10-box; 11-first part; 12-second part; 20-battery cell; 21-shell; 211-casing; 212-cover body; 213-first wall; 22-pressure relief mechanism; 221-pressure relief hole; 23-electrode extraction part; 24-electric energy extraction part; 241-tab; 242-adapter; 2421-first connection section; 242a-main body area; 242b-connecting area; 2422-first surface; 2423-second surface; 2424-second connection section; 243-reinforcing part; 243a-first flanging part; 243b-protrusion; 25-electrode assembly; 26-support member; 261-sub support member; 262-first bottom wall; 263-first side wall; 2631-first sub side wall; 2632-second sub side wall; 264-exhaust channel; 265-concave part; 266-convex part; 27-insulating member; 271-third surface; 272-groove; 2721-sub groove; 2722-protruding part; 2723-insulating component; 273-fourth surface; 274-through hole; 28-reinforcer; 281-second bottom wall; 282-second side wall; 283-second flanging part; 200-controller; and 300-motor.

### Detailed Description of Embodiments

In order to make the objectives, technical solutions and advantages of the embodiments of the present disclosure clearer, the technical solutions in the embodiments of the present disclosure will be described clearly and completely below with reference to the drawings in the embodiments of the present disclosure. Obviously, the embodiments described are some of, rather than all of, the embodiments of the present disclosure. The components of the embodiments of the present disclosure, typically described and shown in the drawings herein, can be arranged and designed in various different configurations.

Therefore, the following detailed description of the embodiments of the present disclosure provided in the drawings is not intended to limit the scope of the present disclosure, but only to represent the selected embodiments of the present disclosure. All the other embodiments obtained by those of ordinary skill in the art based on the embodiments of the present disclosure without any creative effort shall fall within the scope of protection of the present disclosure.

The following will provide a detailed description to the embodiments of the technical solution of the present disclosure in conjunction with the drawings. The following embodiments are only used to provide a clearer explanation of the technical solution of the present disclosure, and therefore are only examples and cannot be used to limit the scope of protection of the present disclosure.

Unless otherwise defined, all technical and scientific terms used in the present disclosure have the same meanings as those commonly understood by those skilled in the art to which the present disclosure belongs. The terms used in the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions.

In the description of the embodiments of the present disclosure, the technical terms "first", "second", etc. are only used to distinguish different objects and cannot be understood as indicating or implying relative importance or implying the quantity, specific order, or primary and secondary relationship of the indicated technical features. In the description of the embodiments of the present disclosure, the meaning of "multiple" refers to two or more, unless otherwise expressly specified.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment. Those skilled in the art should understand, in explicit and implicit manners, that an embodiment described in the present disclosure may be combined with another embodiment.

The term "multiple (a plurality of)" in the description of the embodiments of the present disclosure refers to two or more (including two).

In the description of embodiments of the present disclosure, the orientation or positional relationship indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" is based on the orientation or positional relationship shown in the drawings, and it is only for facilitating describing the embodiments of the present disclosure and simplifying the description, rather than indicating or implying that the related apparatus or element must be in a specific orientation, or constructed or operated in a specific orientation, and therefore it cannot be understood as a limitation to the embodiments of the present disclosure.

In the description of the embodiments of the present disclosure, unless otherwise expressly specified and defined, the technical terms "arrange", "mount", "connect", "connection", and "fix" should be broadly understood, for example, it may be a fixed connection, or a detachable connection, or integrally formed; it may be a mechanical connection, electrical connection or signal connection; it may be a direct connection, a indirect connection through an intermediate medium, or a communication of interiors or interaction relationship of two elements. For those of ordinary skill in the art, the specific meaning of the foregoing terms in the embodiments of the present disclosure may be understood according to specific circumstances.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The battery mentioned in the embodiments of the present disclosure refers to a single physical module that includes one or more battery cells to provide higher voltage and capacity. Multiple battery cells can be connected in series, parallel, or hybrid. The battery can further include a box used to encapsulate one or more battery cells. The box can prevent liquids or other foreign objects from affecting the charging or discharging of battery cells.

In the present disclosure, the battery cell can include a lithium ion secondary battery, a lithium ion primary battery, a lithium sulfur battery, a sodium lithium ion battery, a sodium ion battery or a magnesium ion battery, etc., which is not limited by the embodiments of the present disclosure. The battery cell can be cylindrical, flat, or rectangular, or be of other shapes, which is also not limited by the embodiments of the present disclosure.

The battery cell includes an electrode assembly and an electrolyte, and the electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector, and the positive electrode current collector without the positive electrode active substance layer protrudes from the positive electrode current collector coated by the positive electrode active substance layer. The positive electrode current collector without the positive electrode active substance layer can be used as the positive electrode tab directly. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector, and the negative electrode current collector without the negative electrode active substance layer protrudes from the negative electrode current collector coated by the negative electrode active substance layer. The negative electrode current collector without the negative electrode active substance layer can be used as the negative electrode tab directly. The material for the negative electrode current collector can be copper, and the active substance of the negative electrode can be carbon, silicon or the like. In order to ensure that fusing does not occur under a high current, multiple positive electrode tabs are provided and stacked together, and multiple negative electrode tabs are provided and stacked together. The material of the separator can be PP (polypropylene) or PE (polyethylene), etc. In addition, the electrode assembly can be of a wound structure or a laminated structure (stacked structure), which is not limited by the embodiments of the present disclosure.

When the thermal runaway of a battery cell occurs, it is easy to catch fire and explode, which poses significant safety hazards. How to improve the safety performance of the battery is an urgent problem that needs to be solved in the development of battery technology.

In order to effectively improve the safety performance of battery cells, inventor has found that a pressure relief mechanism can be installed on the battery cell. When the battery cell undergoes the thermal runaway and causes a sudden increase in pressure or temperature inside the battery cell, the pressure relief mechanism activates to form a pressure relief hole, which communicates the internal and external parts of the battery cell, so as to release outwardly the internal pressure of the battery cell in a timely manner to prevent the battery cell from exploding or catching fire, thus effectively improving the safety performance of battery cells.

But the inventor noticed that even if a pressure relief mechanism is installed on the battery cell, it still cannot effectively solve the problem of the battery cell being prone to fire and explosion due to thermal runaway.

The inventor analyzed its cause and found that an electric energy extraction part is usually installed inside the battery cell to extract the electrical energy generated by the electrode assembly from the battery cell through the electric energy extraction part. The interior of a battery cell generally includes an insulating member used to insulate and isolate the shell and electric energy extraction part. When the battery cell experiences thermal runaway, the pressure relief mechanism actuates to form a pressure relief hole, and the insulating member is melted. During the flow of high-temperature and high-pressure gas inside the battery cell towards the pressure relief mechanism, the electric energy extraction part will be impacted. At least a part of the electric energy extraction part will move towards the pressure relief hole due to the high temperature and gas force. When lacking the obstruction by the insulating member, the electric energy extraction part will cover the pressure relief hole and deform at the corresponding position of the pressure relief hole. The deformed part of the electric energy extraction part will extend into the pressure relief hole and block the pressure relief hole, thereby causing the internal pressure of the battery cell to be unable to be released in a timely and effective manner, and leading to the explosion and fire of the battery cell.

Based on the above reasons, in order to solve the problem that the electric energy extraction part is prone to deformation and obstructs the pressure relief hole, resulting in poor safety performance of the battery cell, the inventor has studied and designed a battery cell. A support member is set inside the casing of the battery cell, which can limit the electric energy extraction part from blocking pressure relief hole formed by the pressure relief mechanism in the event of thermal runaway of the battery cell.

When the battery cell experiences thermal runaway, the pressure relief mechanism releases the internal pressure of the battery cell, and the high-temperature and high-pressure gas flows towards the pressure relief mechanism. The electric energy extraction part is easily deformed due to the impact by the temperature and force of the high-temperature and high-pressure gas. The support member can effectively limit deformation or the electric energy extraction part from blocking the pressure relief hole after movement, thereby avoiding the problem of the battery cell being unable to exhaust and release pressure smoothly due to the obstruction of the pressure relief hole by the electric energy extraction part, reducing the risk of fire and explosion caused by poor pressure relief during thermal runaway of battery cells, and effectively improving the safety performance of battery cells.

The battery cell disclosed in the embodiments of the present disclosure can be used in, but is not limited to, electrical equipment such as vehicles, ships, or aircraft. The battery cell, battery, etc. disclosed in the present disclosure can be used to form the power supply system of the electrical equipment.

The embodiment of the present disclosure provides an electrical equipment using a battery as a power source, which can be but is not limited to mobile phones, tablet computers, laptops, electric toys, electric tools, electromobile, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

The battery described in the embodiment of the present disclosure is not only applicable to the aforementioned electrical equipment, but can also be applicable to all electrical equipment that use batteries. However, for the sake of simplicity, the following embodiment takes an electrical equipment of an embodiment of the present disclosure being a vehicle as an example to illustrate.

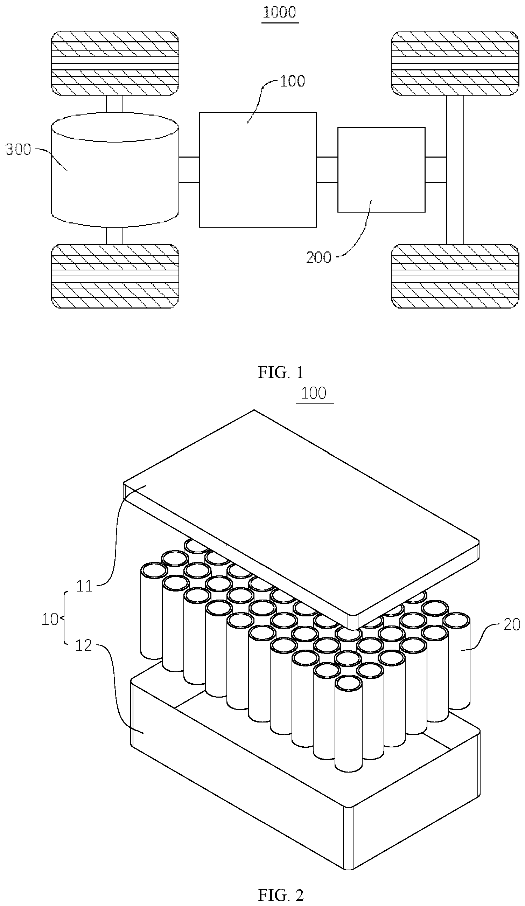

Referring to FIG. 1, FIG. 1 is a structural schematic view of the vehicle 1000 provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000. The vehicle 1000 can also include a controller 200 and a motor 300, wherein the controller 200 is used to control the battery 100 to supply power to the motor 300, for example, used for the working power demand during startup, navigation, and running of the vehicle 1000.

In some other embodiments, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present disclosure, which can include a box 10 and the battery cell 20. The battery cell 20 is accommodated within the box 10. In the above, the box 10 is used to provide accommodating space for the battery cell 20, and the box 10 can be of various structures. In some embodiments, the box 10 may include a first part 11 and a second part 12, with the first part 11 and the second part 12 covering each other. The first part 11 and the second part 12 jointly define an accommodating space for accommodating the battery cell 20. The second part 12 can be in a hollow structure with an opening at one end, the first part 11 can be in a plate-shaped structure, and the first part 11 is covered on the opening side of the second part 12 to jointly define the accommodating space by the first part 11 and the second part 12. The first part 11 and the second part 12 can also both be in hollow structure with an opening on one side, and the opening side of the first part 11 is covered on the opening side of the second part 12. Of course, the box 10 formed by the first part 11 and the second part 12 can be of various shapes, such as cuboid, cube, etc.

In the battery 100, the battery cells 20 can be multiple, and multiple battery cells 20 can be connected in series, parallel, or hybrid. Hybrid connection means that both series connection and parallel connection exist among multiple battery cells 20. Multiple battery cells 20 can be directly connected in series, parallel, or hybrid together.

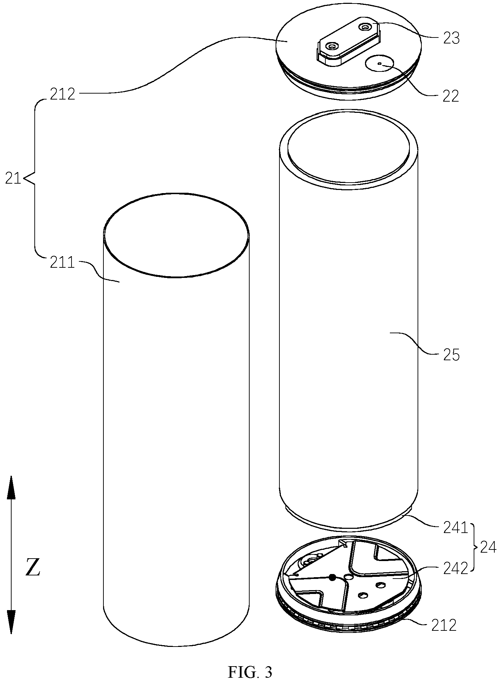

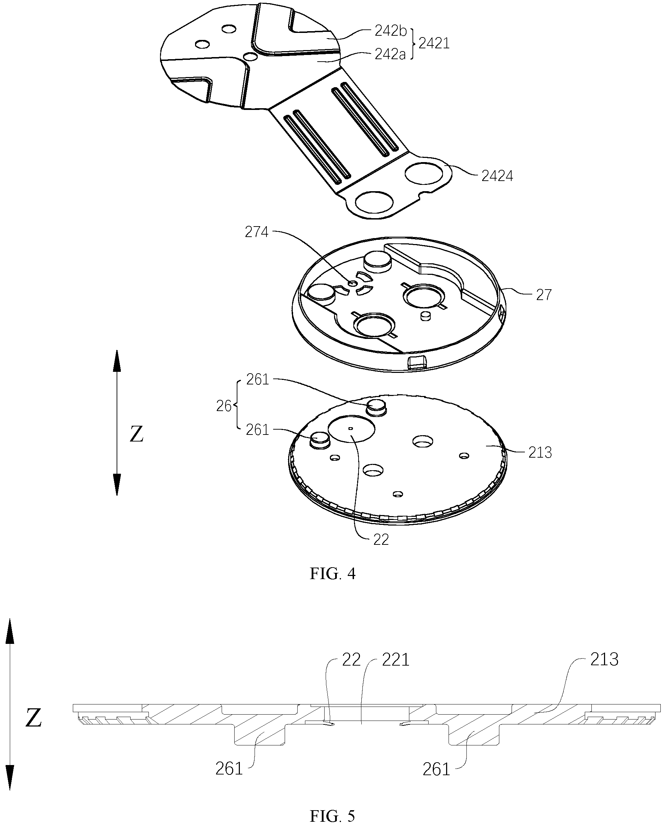

Referring to FIGS. 3 to 5, FIG. 3 is an exploded view of the battery cell provided in some embodiments of the present disclosure; FIG. 4 is an exploded view of the first wall, the adapter and the insulating member of the battery cell provided in some embodiments of the present disclosure; and FIG. 5 is a sectional view of the first wall and the support member when the battery cell undergoes the thermal runaway provided in some embodiments of the present disclosure. The battery cell 20 provided in some embodiments of the present disclosure may include a shell 21, an electrode assembly 25, an electric energy extraction part 24, a pressure relief mechanism 22, and a support member 26. The shell 21 includes a first wall 213, and the pressure relief mechanism 22 is provided on the first wall 213. The electrode assembly 25 is arranged inside the shell 21, and the electric energy extraction part 24 is arranged inside the shell 21 and connected to the electrode assembly 25. The support member 26 is arranged inside the shell 21, and is configured to limit the electric energy extraction part 24 from blocking the pressure relief hole 221 formed by the pressure relief mechanism 22 when the battery cell 20 undergoes the thermal runaway.

The shell 21 is a component used to accommodate the electrode assembly 25. The shell 21 can be of various shapes, such as cylinder, cuboid, etc. The shell 21 can include a casing 211 and a cover body 212, and the cover body 212 covers the opening of the casing 211. The cover body 212 and the casing 211 jointly define a sealing space.

The casing 211 can be of a hollow structure with one end forming an opening, and the casing 211 can also be of a hollow structure with two opposite ends forming openings. The material of casing 211 can be various, such as copper, iron, aluminum, steel, aluminum alloy, etc.

The cover body 212 is a component that blocks the opening of the casing 211 to isolate the internal environment of the battery cell 20 from the external environment. The cover body 212 and the casing 211 jointly define a sealed space for accommodating the electrode assembly 25, the electrolyte, and other components. The cover body 212 can be connected to the casing 211 by welding or rolling to close the opening of the casing 211. The shape of the cover body 212 can match the shape of the shell 21. For example, the casing 211 is of a cuboid structure, and the cover body 212 is of a rectangular plate-like structure matching the shell 21. For another example, the casing 211 is of a cylinder, and the cover body 212 is of a circular plate-like structure matching the casing 211. The material of cover body 212 can also be various, such as copper, iron, aluminum, steel, aluminum alloy, etc.

**In** the battery cell 20, one or two cover bodies 212 can be provided. **In** the embodiment where the casing 211 is of a hollow structure with openings formed at both ends, two cover bodies 212 can be provided correspondingly, and the two cover bodies 212 each cover the two openings of the casing 211. The two cover bodies 212 and the casing 211 jointly define a sealed space. **In** the embodiment where the casing 211 is of a hollow structure with an opening formed at one end, one cover body 212 can be provided correspondingly, and the cover body 212 covers the opening at the one end of the casing 211. The one cover body 212 and the casing 211 jointly define a sealed space.

**In** some embodiments, the first wall 213 can be the cover body 212, and of course, the first wall 213 can also be other side walls of the casing 211.

The electrode assembly 25 is a component in the battery cell 20 that undergoes electrochemical reactions. The electrode assembly 25 can include a positive electrode plate, a negative electrode plate, and a separator. The electrode assembly 25 can be in a wound structure formed by winding the positive electrode plate, the separator, and the negative electrode plate. Of course, the electrode assembly 25 can also be in a laminated structure.

The pressure relief mechanism 22 is an element or component that releases the internal pressure or temperature of the battery cell 20. The pressure relief mechanism 22 can adopt forms such as explosion-proof valves, gas valves, pressure relief valves, safety valves, and scratches set on the shell 21. Moreover, the pressure-sensitive or temperature-sensitive elements or structures can be used specifically. That is to say, when the internal pressure or temperature of battery cell 20 reaches a threshold, the pressure relief mechanism 22 executes actions or the weakened structure provided in the pressure relief mechanism 22 is damaged, thereby forming a pressure relief hole 221 for the pressure or temperature inside the battery cell to be released.

Pressure relief hole 221 refers to the hole formed on the shell 21 to communicate the interior and exterior of the battery cell when thermal runaway of the battery cell occurs. The pressure relief hole can be formed by actuation of a pressure relief mechanism. If the internal pressure of battery cell 20 exceeds the threshold, at least a part of the pressure relief mechanism is damaged to form the pressure relief hole 221.

The actions generated by the pressure relief mechanism 22 can include but are not limited to a state that at least a portion of the pressure relief mechanism 22 is broken, crushed, torn or opened, and so on.

As shown in FIG. 3, when the first wall 213 is the cover body 212, the pressure relief mechanism 22 can be installed on the cover body 212.

The electric energy extraction part 24 is arranged inside the shell 21, and is connected to the electrode assembly 25. The electric energy extraction part 24 plays a role in overcurrent and confluence. It can be understood that one end of the electric energy extraction part 24 is connected to the electrode assembly 25, and the other end can be connected to the electrode extraction part 23 set on the shell 21. The electrode extraction part 23 is a component for extracting the electric energy of the battery cell 20, which is used for electrical connection with adjacent battery cells 20 or other conductive parts. The electrode extraction part 23 can have multiple implementation structures, and for example, the electrode extraction part 23 can be an electrode terminal set on the shell 21, and its structure can be in the form of sheets, columns, etc., and the electrode extraction part 23 can also be part or all of the first wall. As shown in FIG. 3, the electrode extraction part 23 can be arranged on the cover body 212. In other embodiments, the electrode extraction part 23 can also be arranged at the casing 211.

According to some embodiments of the present disclosure, referring to FIG. 3, the electric energy extraction part 24 can include a tab 241, which can be connected to the electrode assembly 25 through welding, bonding by conductive adhesive, and other methods.

Of course, the tab 241 can also be an integrated structure with the electrode assembly 25, that is, the part of the electrode plate without the active substance layer can form the tab 241. The tab can be a copper foil or aluminum foil with a smaller thickness.

In some other embodiments, referring to FIG. 3, the electric energy extraction part 24 can include a tab 241 and an adapter 242. As mentioned above, the tab 241 is connected to the electrode assembly 25, while the adapter 242 is connected to the tab 241 and the electrode extraction part 23. The material of adapter 242 can be copper, aluminum, or stainless steel.

The support member 26 can also have various implementation forms, for example: the support member 26 can be columnar, and the columnar support member 26 can be located on the first wall 213 and on the side of the pressure relief mechanism 22. Of course, the support member 26 can include multiple columnar structures, which are separated from each other and arranged around the pressure relief mechanism 22.

The support member 26 can also be arranged in an annular shape around the pressure relief mechanism 22, and the side wall of the annular support member 26 can be provided with a channel communicating the internal space of the annular support member 26 and the external space of the annular support member 26. When the electric energy extraction part 24 abuts against the end face of the annular support member 26, the channel on the side wall of the support member 26 can effectively ensure that gas smoothly enters the internal space of the annular support member 26 and is discharged through the pressure relief mechanism 22. It can be understood that the annular support member 26 can be in the form of a circular ring, elliptic ring, or frame shape.

The support member 26 can also be roughly in a cover structure and cover the pressure relief mechanism 22. The cover structure can have one or more through holes. When the electric energy extraction part 24 is deformed and then abuts against the support member 26, the support member 26 can limit the electric energy extraction part from approaching and blocking the pressure relief hole 221. The through holes on the support member 26 can effectively ensure that gas smoothly enters the internal space of the annular support member 26 and is discharged through the pressure relief mechanism 22.

The support member 26 can be arranged fixedly on the first wall 213. When the electric energy extraction part 24 is close to the pressure relief mechanism 22, the support member 26 can prevent the electric energy extraction part 24 from blocking the pressure relief hole 221 formed at the pressure relief mechanism 22 when the thermal runaway of the battery cell 20 occurs.

The support member 26 can also be arranged on the electric energy extraction part 24. When a portion of the electric energy extraction part 24 is close to the first wall 213, the support member 26 arranged on the electric energy extraction part 24 can abut against the first wall 213 and prevent the part of the electric energy extraction part 24 corresponding to the pressure relief mechanism 22 from continuing to approach the pressure relief mechanism 22, thereby allowing a gap to be formed between the first wall 213 and the electric energy extraction part 24 that allows gas to pass through, so as to avoid the electric energy extraction part 24 from blocking the channel that the gas inside the battery cell flows to the pressure relief hole 221.

Of course, the support member 26 can also be an independent component located between the electric energy extraction part 24 and the first wall 213, which is connected to the shell 21 and is arranged inside the shell 21. For example, the support member 26 can be one or more limit columns connected to the inner wall of the casing 211, and the limit columns protrude from the inner wall of the casing 211. When part of the electric energy extraction part 24 deforms and approaches the first wall 213, the support member 26 can prevent the electric energy extraction part from deforming towards the pressure relief hole 221. Thus, the electric energy extraction part 24 is restricted from blocking the pressure relief hole 221 formed at the pressure relief mechanism 22 when the battery cell 20 undergoes thermal runaway.

It can be understood that the support member 26 can also be other structures, and the above does not exhaustive the structure of the support member 26, as long as the support member 26 can achieve the function of restricting the electric energy extraction part from blocking the pressure relief hole of the pressure relief mechanism 22, or in other words, the support member 26 can leave a gap between the first wall 213 and the electric energy extraction part 24 that allows gas to pass through. The electric energy extraction part 24 blocks the pressure relief hole 221 formed by the pressure relief mechanism 22 when the battery cell 20 undergoes thermal runaway, which means that when the battery cell 20 undergoes thermal runaway, at least part of the electric energy extraction part 24 moves towards the first wall and covers or seals the pressure relief hole formed by the pressure relief mechanism 22, so that the pressure relief hole 221 formed by the pressure relief mechanism 22 cannot communicate the inner cavity of the shell 21 and the external part of the battery cell, or part of the pressure relief hole 221 is blocked by the electric energy extraction part 24, which reduces the pressure relief capacity of pressure relief hole 221.

The battery cell 20 of the embodiments of the present disclosure is equipped with a support member 26 inside the shell 21, which can limit the electric energy extraction part 24 from blocking the pressure relief hole 221 of the pressure relief mechanism 22 when the battery cell 20 experiences thermal runaway. When the battery cell 20 experiences thermal runaway, the high-temperature and high-pressure gas generated in the shell 21 flows towards the direction of the pressure relief mechanism 22. The electric energy extraction part 24 arranged in the shell 21 is easily deformed or moved towards the first wall 213 after being heated and subjected to the force of the airflow, which ultimately blocks the pressure relief hole 221 of the pressure relief mechanism 22. The support member 26 provided in the shell 21 in the present disclosure can effectively limit the deformed or moved electric energy extraction part 24 from blocking the pressure relief hole 221 of the pressure relief mechanism 22, so as to avoid the problem of the high-temperature and high-pressure gas being unable to be discharged from the shell 21 in a timely manner due to the obstruction to the pressure relief hole 221 by the electric energy extraction part 24, thereby reducing the risk of explosion of the battery cell 20 due to poor exhaust during thermal runaway, and effectively improving the safety performance of the battery cell 20.

According to some embodiments of the present disclosure, the melting point of the support member 26 is higher than 200 °C.

The support member 26 can be made of metal materials, ceramic materials, etc. with high melting points. The melting point of the support member 26 can be higher than 300 °C, 400 °C, 500 °C, etc., and can also be greater than 600 °C or even higher. The higher the melting point of the support member 26 is, the better its structural stability in high-temperature and high-pressure environments is. The high-melting-point support member 26 can effectively ensure the functional stability of the support member 26 in the event of thermal runaway of the battery cell 20.

According to some embodiments of the present disclosure, the support member 26 is a metal component.

The material of the support member can be copper, iron, aluminum, aluminum alloy, etc. In the implementation form where the support member 26 is installed on the first wall 213, the material of the support member 26 can be the same as that of the first wall 213, so that the support member 26 can be welded or integrated with the first wall 213. Of course, the materials of the support member 26, the first wall 213, and the electric energy extraction part 24 can also be different. As an example, the support member 26 can be made of metal material with a melting point higher than 200 °C.

The metal support member 26 is easy to achieve a higher structural strength, thereby effectively ensuring the blocking and limiting effect of the support member 26 on the electric energy extraction part. At the same time, the metal support member 26 is easy to be fixed in the shell 21, thereby making it convenient for the production and manufacturing of the battery cell 20.

According to some embodiments of the present disclosure, referring to FIGS. 3 and 4, the battery cell 20 further includes: an insulating member 27, wherein the insulating member 27 is at least partially arranged between the first wall 213 and the electric energy extraction part 24 and configured to insulate and isolate the first wall 213 from the electric energy extraction part 24, wherein the melting point of the support member 26 is higher than that of the insulating member 27, and the support member 26 is configured to limit the electric energy extraction part 24 from blocking the pressure relief hole 221 formed by the pressure relief mechanism 22 in the event of thermal runaway of the battery cell 20 after the insulating member 27 melts.

The material of insulating member 27 can be plastic, such as PP (polypropylene) or PE (polyethylene), which is beneficial for reducing the weight of the battery cell 20 while ensuring insulation effect.

The insulating member 27 is at least partially located between the first wall 213 and the electric energy extraction part 24, indicating that a part of the structure of the insulating member 27 is located between the first wall 213 and the electric energy extraction part 24, or that the overall structure of the insulating member 27 is located between the first wall 213 and the electric energy extraction part 24.

Generally, a through hole 274 is set at the position corresponding to the pressure relief mechanism 22 of the insulating member 27 to ensure that the gas inside the battery cell 20 smoothly reaches the pressure relief mechanism 22. However, when the battery cell 20 undergoes thermal runaway, the temperature and pressure inside the battery cell 20 are higher, which will melt the insulating member 27 and deform a part of the electric energy extraction part 24 to block the pressure relief hole 221, which prevents the gas inside the battery cell from flowing to the pressure relief hole 221.

After providing the support member, when the battery cell 20 is in a normal state, the insulating member 27 insulates and isolates the first wall 213 from the electric energy extraction part 24. When the battery cell 20 undergoes thermal runaway, the insulating member 27 is prone to melting by the high temperature and the electric energy extraction part 24 is prone to deformation. At this time, the support element 26 can be supported between the electric energy extraction part 24 and the first wall 213 to form a channel allowing gas to pass through between the electric energy extraction part 24 and the first wall 213, which facilitates the gas inside the battery cell 20 to pass through this channel and be discharged from the battery cell 20 through the pressure relief mechanism 22, thereby preventing the deformed or displaced electric energy extraction part 24 from blocking the pressure relief hole 221 of the pressure relief mechanism 22.

According to some embodiments of the present disclosure, the support member 26 is fixed to the first wall 213.

Specifically, the first wall 213 includes an inner surface facing the electrode assembly 25, and a support member 26 is fixed to the inner surface of the first wall 213 and protrudes from the inner surface. The support member 26 is fixed to the first wall 213 in various implementation forms. For example, the support member 26 can be integrally formed with the first wall 213. The support member 26 and the first wall 213 can also be set independently and the support member 26 can be fixedly connected to the first wall 213 through welding, adhesive bonding, snapping, fastener locking, and other methods. The material of the support member 26 can be the same as the material of the first wall 213, so as to facilitate the welding or integrated formation of the support member 26 and the first wall 213. The material of support member 26 can also be different from that of the first wall 213. For example, the material of the first wall 213 can be aluminum, stainless steel, or aluminum alloy, while the material of support member 26 can be ceramic.

The support member 26 is fixed to the first wall 213 to ensure the connection stability of the support member 26, thereby ensuring the stress stability of the support member 26, which is conducive to fully exerting the limiting effect of the support member 26 on the electric energy extraction part 24.

According to some embodiments of the present disclosure, the support member 26 and the first wall 213 are integrally formed.

The material of the support member can be the same as the material of the first wall 213, and the support member 26 and the first wall 213 can be integrally formed through forging, casting, stamping, and other methods.

The support member and the first wall 213 are integrally formed, which facilitates manufacturing and assembly of the battery cell 20 while effectively ensuring the structural strength of the support member 26.

According to some embodiments of the present disclosure, the support member 26 is arranged around the pressure relief mechanism 22.

As mentioned earlier, the support member 26 can be arranged in a annular shape around the pressure relief mechanism 22. One end of the annular support member 26 is fixedly connected to the first wall 213, and the other end faces the electric energy extraction part 24. The side wall of the annular support member 26 can be provided with a channel communicating the internal space of the annular support member 26 and the external space of the annular support member 26. When the deformed electric energy extraction part 24 abuts against the end portion of the annular support member 26, the channel on the side wall of the support member 26 can effectively ensure that gas smoothly enters the internal space of the annular support member 26 and is discharged through the pressure relief mechanism 22. It can be understood that the annular support member 26 can be in the form of a circular ring, elliptic ring, or rectangular frame shape.

Of course, the support member 26 can also include multiple split structures arranged around the pressure relief mechanism 22, with multiple split structures spaced apart from each other and arranged around the pressure relief mechanism 22. The adjacent two split structures form a channel that can communicate the pressure relief mechanism 22 and the outside of the support member 26. When the electric energy extraction part 24 is deformed and abuts against some or all of the split structures, this channel can effectively ensure the smooth discharge of gas through the pressure relief mechanism 22.

The support member 26 is arranged around the pressure relief mechanism 22 to form stable support around the pressure relief mechanism 22, thereby further improving the stability of the support member 26 to support and limit the electric energy extraction part 24.

According to some embodiments of the present disclosure, referring to FIG. 4 and further referring to FIG. 5, FIG. 5 shows the main view of the first wall and support member provided by some embodiments of the present disclosure. The support member 26 includes multiple sub support members 261, which are arranged around the pressure relief mechanism 22.

Each sub support member 261 can be in the form of a cylindrical structure, a hexahedral structure, a conical structure, an arc-shaped protrusion 243b structure, and so on. Multiple sub support members 261 can be spaced apart from each other and arranged around the pressure relief mechanism 22. One end of the sub support member 261 is integrally formed or fixedly connected to the first wall 213, and the other end opposite to the first wall 213 is facing the electric energy extraction part 24. Moreover, the end of the sub support member 261 facing the electric energy extraction part 24 can have a bending section, which can be set oppositely to the first wall 213. The projection of the bending section on the first wall 213 can fall into the pressure relief mechanism 22 or not. The bending section can effectively increase the contact area between the electric energy extraction part 24 and the support member 26, thereby further improving the blocking and limiting effect of the support member 26 on the electric energy extraction part 24.

It can be understood that the support member 26 can include two, three, four, or even more sub support members 261. For example, the support member 26 includes two sub support members 261, which are fixed to the first wall 213 and located on two opposite sides of the pressure relief mechanism 22.

The support member 26 includes multiple sub support members 261, which are arranged around the pressure relief mechanism 22. The multiple sub support members 261 can support the electric energy extraction part 24 from multiple positions, and an exhaust channel 264 communicated with the pressure relief mechanism 22 can be formed between two adjacent sub support members 261, so as to enable the high-temperature and high-pressure gas to pass through the exhaust channel 264 and to be discharged through the pressure relief mechanism 22. It has a simple structure and strong practicality.

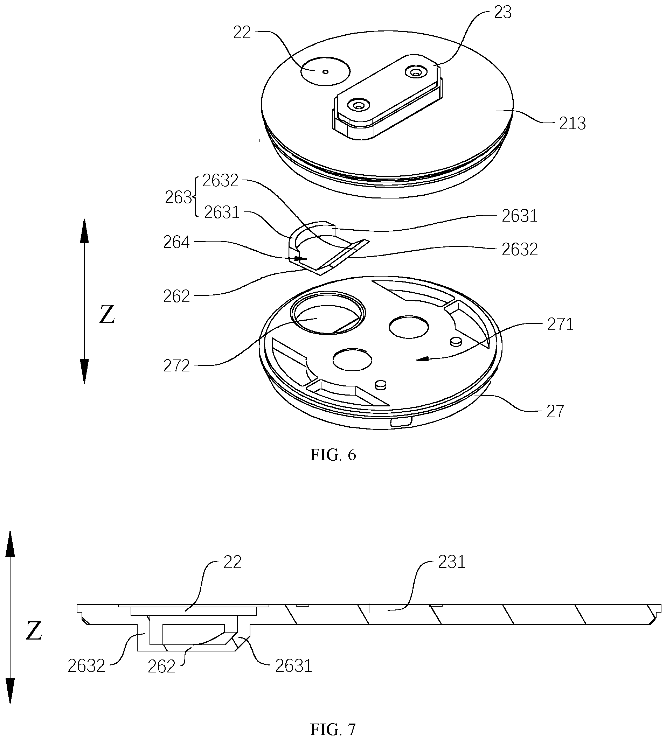

According to some further embodiments of the present disclosure, referring to FIGS. 6 and 7, FIG. 6 is an exploded view of the first wall, the insulating member and the support member of the battery cell provided in some other embodiments of the present disclosure; and FIG. 7 is a sectional view of the first wall and the support member provided in some other embodiments of the present disclosure. The support member 26 is covered on the pressure relief mechanism 22, and the support member 26 has an exhaust channel 264 communicating the internal space of the support member 26 with the external space of the support member 26.

Specifically, the support member 26 can be in a structure similar to a cover body, with the opening surface of the cover body facing towards the first wall 213 and fixedly connected to the first wall 213 to cover the pressure relief mechanism 22 within the support member 26. It can be understood that the pressure relief mechanism 22 can be fully enclosed within the support member 26 or partially enclosed within the support member 26.

The support member 26 can be in a mesh or porous cover structure, and the mesh holes on the support member 26 form the above-mentioned exhaust channel 264. Moreover, the shape of the support member 26 can be of a hemispherical shape, a cylindrical shape with one end opened, etc. Of course, the support member 26 can also include a support wall opposite to the pressure relief mechanism 22 and a side wall connecting the support wall to the first wall 213. The support wall is used to abut against the deformed electric energy extraction part 24, and the exhaust channel 264 can be arranged on the side wall.

The support member 26 is covered on the pressure relief mechanism 22, which provides protection, similar to the protective cover, to the pressure relief mechanism 22. On the one hand, it can effectively ensure the structural strength of the support member 26 itself, thereby efficiently ensuring the stability of the support member 26 under stress. On the other hand, the support member 26 covers the pressure relief mechanism 22, which can fully limit the electric energy extraction part 24 from blocking the pressure relief hole 221. The support member 26 is equipped with the exhaust channel 264 communicating the internal and external spaces of the support member 26, to ensure that in the event of thermal runaway of the battery cell 20, the gas inside the battery cell 20 can smoothly pass through the exhaust channel 264 and reach the electric energy extraction part 24, thereby ensuring smooth pressure relief of the electric energy extraction part 24.

According to some embodiments of the present disclosure, referring to FIGS. 6 and 7, the support member 26 includes a first bottom wall 262 and a first side wall 263, wherein the first bottom wall 262 and the pressure relief mechanism 22 are arranged oppositely to each other along the thickness direction of the first wall 213, and a gap is formed between the first bottom wall 262 and the pressure relief mechanism 22. The first side wall 263 connects the first bottom wall 262 and the first wall 213, and the exhaust channel 264 is formed on the first side wall 263.

As shown in FIG. 7, the thickness direction of the first wall 213 extends along the first direction Z, and the first bottom wall 262 and the first wall 213 are spaced apart along the first direction Z, thereby forming a gap between the first bottom wall 262 and the pressure relief mechanism 22.

The first side wall 263 is connected to the first bottom wall 262 and the first wall 213, and the exhaust channel 264 is formed on the first side wall 263. There are various implementation forms of the first side wall 263 and the first channel. For example, the first side wall 263 can be in an incompletely closed annular structure, and the first side wall 263 is arranged around the pressure relief mechanism 22 and surrounds the first bottom wall 262, wherein the opening of the first side wall 263 forms the exhaust channel 264.

For another example, the first side wall 263 can be in a completely closed annular shape, and the wall portion of the first side wall 263 is provided with one or more through holes, which form an exhaust channel 264.

Of course, the first side wall 263 can also include multiple sub side walls, which are spaced apart around the pressure relief mechanism 22, and one exhaust channel 264 is formed between every two adjacent sub side walls.

As an example, as shown in FIG. 6, the first side wall 263 includes a first sub side wall 2631 and a second sub side wall 2632. The first sub side wall 2631 is an arc-shaped wall that extends axially in the first direction Z, and the second sub side wall 2632 is inclined compared to the first bottom wall 262. The first sub side wall 2631 and the second sub side wall 2632 are spaced apart and located on two opposite sides of the first bottom wall 262, and an exhaust channel 264 is formed between the first sub side wall 2631 and the second sub side wall 2632.

The first bottom wall is arranged oppositely to the first wall 213, thereby creating a gap between the first bottom wall 262 and the pressure relief mechanism 22. The first bottom wall 262 faces the electric energy extraction part 24 to limit the electric energy extraction part 24 from approaching the pressure relief mechanism 22, so as to limit the electric energy extraction part 24 from blocking the pressure relief hole 221. At the same time, the exhaust channel 264 is formed on the first side wall 263, which can effectively reduce the risk of the exhaust channel 264 being blocked by the electric energy extraction part 24 and ensure the smoothness of pressure relief of the pressure relief mechanism 22.

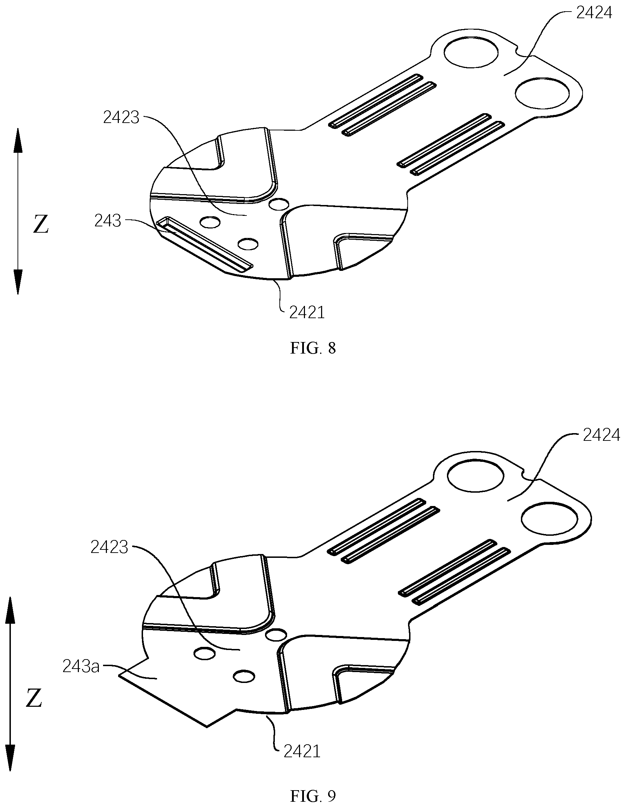

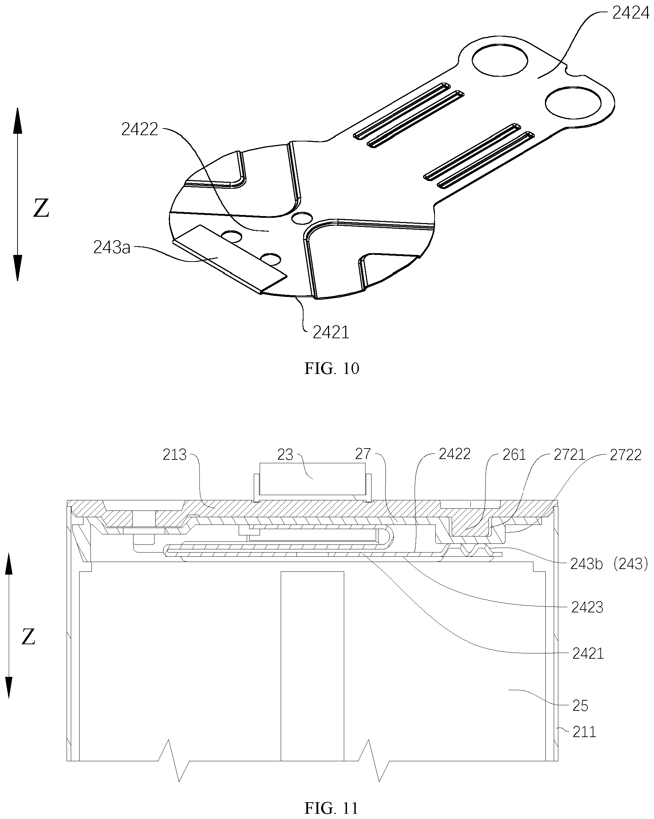

According to some embodiments of the present disclosure, referring to FIG. 3 and further referring to FIGS. 8 to 11, FIG. 8 is a schematic view of the structure of the adapter with the reinforcing part provided in some embodiments of the present disclosure; FIG. 9 is a schematic diagram of the structure of the first flanging part in the unfolded state on the adapter provided in some embodiments of the present disclosure; FIG. 10 is a schematic diagram of the structure of the first flanging part in the folded state on the adapter provided in some embodiments of the present disclosure; and FIG. 11 is a locally sectional view of the battery cell provided in some embodiments of the present disclosure. The battery cell 20 further includes: an electrode extraction part 23, arranged on the first wall 213, wherein the electric energy extraction part 24 includes an adapter 242 and a tab 241, the tab 241 is connected to the electrode assembly 25, the adapter 242 is arranged between the first wall 213 and the electrode assembly 25, the tab 241 and the electrode extraction part 23 are electrically connected through the adapter 242, and the support member 26 is configured to limit the adapter 242 from blocking the pressure relief hole 221 formed by the pressure relief mechanism 22 in the event of thermal runaway of the battery cell 20.

As shown above, the electrode extraction part 23 is a component for extracting the electric energy of the battery cell 20, which is used for electrical connection with adjacent battery cells 20 or other conductive parts. The electrode extraction part 23 can have multiple implementation structures, and for example, the electrode extraction part 23 can be an electrode terminal set on the shell 21, and its structure can be in the form of sheets, columns, etc. For example, the electrode extraction part 23 is an electrode terminal.

The tab 241 can be connected to the electrode assembly 25 through welding, bonding by conductive adhesive, and other methods. The tab 241 can also be an integrated structure with the electrode assembly 25, for example, the part of the electrode plate without the active substance layer forms the tab 241.

The adapter 242 plays an overcurrent and confluence role, and is electrically connected to the tab 241 and the electrode extraction part 23.

There are various implementation forms of adapter 242, for example, adapter 242 can be in the form of a sheet, with a thickness direction extending along the thickness direction of the first wall 213 (the first direction Z shown in the figure). The adapter 242 has a first connection surface and a second connection surface arranged oppositely to each other along its thickness direction, with the first connection surface facing the tab 241 and welded to the tab 241, and the second connection surface facing the first wall 213 and electrically connected to the electrode extraction part 23.

The electric energy extraction part includes an adapter 242 and a tab 241. The tab 241 and the electrode assembly 25 can be formed integrally or connected by welding or other methods. The adapter 242 connects the tab 241 and the electrode extraction part 23. When the battery cell 20 experiences thermal runaway, the tab 241 connected to the electrode assembly 25 is prone to deformation due to the impact of high-temperature and high-pressure gas, which drives the adapter 242 to deform and approach the pressure relief mechanism 22 on the first wall 213. The deformed adapter 242 can easily block the pressure relief hole 221 of the pressure relief mechanism 22, thereby causing airflow to be blocked at the pressure relief mechanism 22 and unable to discharge from the battery cell 20 in a timely manner. The support member 26 can limit the adapter 242 from blocking the pressure relief hole 221 formed by the pressure relief mechanism 22 during thermal runaway of battery cell 20, thereby avoiding the problem of the adapter 242 blocking the pressure relief hole 221 formed by the pressure relief mechanism 22 during thermal runaway of battery cell 20 due to deformation, effectively ensuring the smoothness and timeliness of exhaust when the battery cell 20 experiences thermal runaway, and reducing the risk of explosion of the battery cell 20, so as to effectively improve the safety performance of battery cells 20.

According to some embodiments of the present disclosure, as shown in FIGS. 8 and 11, the adapter 242 includes a reinforcing part 243, wherein the projection of the reinforcing part 243 on the first wall 213 overlaps at least partially with the projection of the support member 26 on the first wall 213 along the thickness direction of the first wall 213.

The thickness direction of the first wall 213 extends along the first direction Z. The projection of the reinforcing part 243 on the first wall 213 overlaps at least partially with the projection of the support member 26 on the first wall 213, which means that the projection of the reinforcing part 243 on the first wall 213 and the projection of the support member 26 on the first wall 213 can fully overlap or partially overlap. The purpose of this setting is that when the adapter 242 moves towards the pressure relief mechanism 22, at least part of the structure of the reinforcing part 243 can abut against the support member 26, and an exhaust channel communicating the pressure relief hole and the interior of the battery cell can be formed between the reinforcing part 243 and the support member 26. The reinforcing part 243 on the adapter 242 cooperates with the support member 26 to jointly limit and block the adapter 242 from approaching the pressure relief mechanism 22 and blocking the pressure relief hole 221 of the pressure relief mechanism 22.

The reinforcing part 243 can be implemented in various forms, for example, the adapter 242 can be locally thickened, and the thickened position on the adapter 242 forms the reinforcing part 243. A groove can also be machined by stamping or other methods on the surface of the adapter 242 that is away from the first wall 213. The surface of the adapter 242 facing the first wall 213 forms a protrusion at the position corresponding to the groove, and the protrusion part forms the reinforcing part 243.

The adapter is equipped with a reinforcing part 243, which increases the structural strength of the adapter 242. When the battery cell 20 experiences thermal runaway, the difficulty of deformation of the adapter 242 increases, thereby reducing the risk of the adapter 242 blocking the pressure relief hole 221. At the same time, since the projection of the reinforcing part 243 on the first wall 213 overlaps at least partially with that of the support member 26 on the first wall 213, when the battery cell 20 experiences thermal runaway and the adapter 242 is approaching the first wall 213, the reinforcing part 243 on the adapter 242 can at least partially abut against the support member 26, and the support member 26 limits the adapter 242, so as to efficiently limit it from blocking the pressure relief hole 221, thereby ensuring that the pressure relief hole 221 can release pressure normally, and making the battery cell 20 have higher safety.

According to some embodiments of the present disclosure, referring to FIG. 8, the adapter 242 includes a first connection section 2421 and a second connection section 2424, wherein the first connection section 2421 is connected to the tab 241, the second connection section 2424 is electrically connected to the electrode extraction part 23, and the reinforcing part 243 is arranged at the first connection section 2421.

As mentioned earlier, the adapter 242 is a component used to achieve electrical connection between the electrode extraction part 23 and the tab 241. The first connection section 2421 and the second connection section 2424 are two parts that constitute the adapter 242, and the first connection section 2421 and the second connection section 2424 can be located at two opposite ends of the adapter 242. The first connection section 2421 and the second connection section 2424 are folded and arranged inside the shell 21. The adapter includes the first connection section 2421 and the second connection section 2424, wherein the first connection section 2421 is connected to the tab 241. In order to ensure the stability of the connection between the first connection section 2421 and the tab 241, the first connection section 2421 is generally larger, and the projection of the first connection section 2421 on the first wall can cover the pressure relief mechanism 22. In order to reduce weight, the second connection section 2424 is generally smaller, and the second connection section 2424 generally does not cover the pressure relief mechanism 22. When the battery cell 20 experiences thermal runaway, the deformation of the tab 241 can directly cause the first connection section 2421 to deform and move closer to the first wall 213. The deformation of the first connection section 2421 can easily block the pressure relief hole 221 formed by the pressure relief mechanism 22 when the battery cell experiences thermal runaway. Therefore, the reinforcing part 243 is set on the first connection section 2421, which can effectively increase the deformation difficulty of the first connection section 2421, and ultimately abut against the support 26 to limit the first connection section 2421 from blocking the pressure relief hole 221 of the pressure relief mechanism 22.

According to some embodiments of the present disclosure, referring to FIGS. 9 and 10, the reinforcing part 243 is a first flanging part 243a connected to the edge of the first connection section 2421. The first connection section 2421 has a first surface 2422 facing the first wall 213 and a second surface 2423 facing away from the first wall 213, and the first flanging part 243a is bent to one side of the first surface 2422 or to one side of the second surface 2423.

The first surface 2422 and second surface 2423 of the first connection section 2421 are two opposite surfaces in the thickness direction of the first connection section 2421, and the thickness direction of the first connection section 2421 extends along the thickness direction of the first wall 213 (the first direction Z shown in the figure).

The reinforcing part 243 can be integrally formed with the first connection section 2421, and of course, the reinforcing part 243 can also be welded with the first connection section 2421. The connection position between the reinforcing part 243 and the edge of the first connection section 2421 can have creases, which facilitates the folding of the reinforcing part 243.

The first flanging part 243a is bent to one side of the first surface 2422 or to one side of the second surface 2423, which means that the reinforcing part 243 can be bent from the edge of the first connection section 2421 towards one side of the first surface 2422 to form the first flanging part 243a, or the reinforcing part 243 can be bent from the edge of the first connection section 2421 towards one side of the second surface 2423 to form the first flanging part 243a.

The reinforcing part is the first flanging part 243a. The first flanging part 243a is bent to one side of the third surface 271 or the first flanging part 243a is bent to one side of the first surface 2422 for easy processing and molding of the adapter 242 and the reinforcing part 243, thereby ensuring that the strength of position of the first connection section 2421 in the reinforcing part 243 is greater than that of other parts of the first connection section 2421.

According to some embodiments of the present disclosure, referring to FIG. 11, the first connection section 2421 has a first surface 2422 facing the first wall 213 and a second surface 2423 facing away from the first wall 213, with the first surface 2422 or second surface 2423 forming a protrusion 243b, which is the reinforcing part 243.

As mentioned earlier, the first surface 2422 and second surface 2423 of the first connection section 2421 are two opposite surfaces in the thickness direction of the first connection section 2421, and the thickness direction of the first connection section 2421 extends along the thickness direction of the first wall 213 (the first direction Z shown in the figure).

The first surface 2422 or the second surface 2423 can form the protrusion 243b, which can be implemented in various forms. For example, a component in block, sheet or other structures can be fixedly connected on the first surface 2422 by welding or other means, which forms the protrusion 243b. Alternatively, a locally thickened area can be formed on adapter 242 through integrated molding, which forms the protrusion 243b.

As an example, as shown in FIG. 11, the first surface 2422 of the adapter 242 forms a protrusion 243b through integrated molding, and at the same time, the second surface 2423 of the adapter 242 can form a groove at a position corresponding to the protrusion 243b. This structure of the adapter 242 avoids increasing the weight of the adapter 242 too much while setting the reinforcing part 243, which is beneficial for reducing the weight of the battery cell 20.

The reinforcing part is a protrusion 243b set on the adapter 242, which is convenient for manufacturing and processing, and effectively ensures the structural strength of the reinforcing part 243.

According to some embodiments of the present disclosure, the reinforcing part 243 is located on the side of the first connection section 2421 facing the first wall 213.

As mentioned earlier, the first connection section 2421 has a first surface 2422 facing the first wall 213 and a second surface 2423 facing away from the first wall 213. The reinforcing part 243 is located on the side of the first connection section 2421 facing the first wall 213, indicating that the reinforcing part 243 is located on the side of the first surface 2422.

That is to say, based on the implementation form of "the reinforcing part 243 is the first flanging part 243a connected to the edge of the first connection section 2421", the reinforcing part 243 bends from the edge of the first connection section 2421 towards one side of the first surface 2422 to form the first flanging part 243a. Based on the implementation form of "the first surface 2422 or the second surface 2423 forms a protrusion 243b, and the protrusion 243b is the reinforcing part 243", the first surface 2422 forms a protrusion 243b, and the protrusion 243b is the reinforcing part 243.

The reinforcing part is located on the side facing the first wall 213 of the first connection section 2421, thereby effectively avoiding the reinforcing part 243 from occupying the connection area between the first connection section 2421 and the tab 241, and avoiding interference with the connection between the adapter 242 and the tab 241.

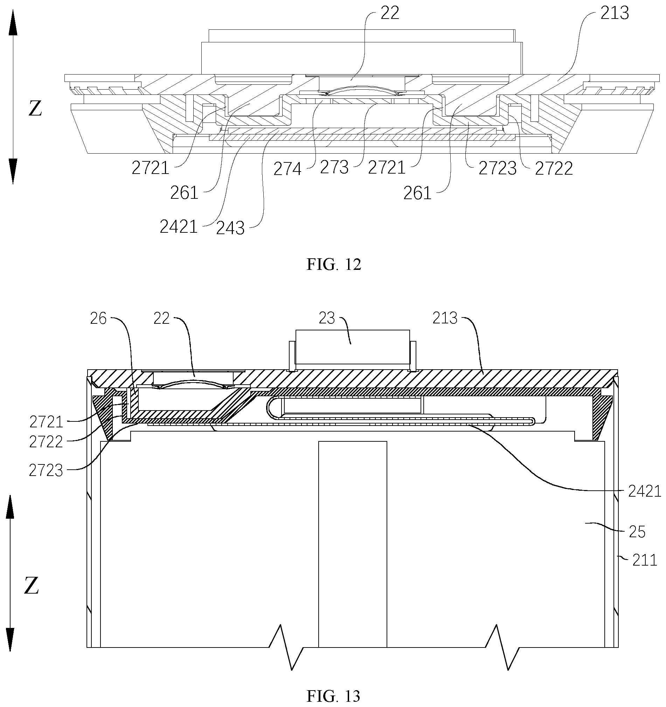

According to some embodiments of the present disclosure, referring to FIGS. 4 to 6 again and further referring to FIGS. 12 and 13, FIG. 12 is a sectional view of the fitting relationship between the insulating member and the support member provided in some embodiments of the present disclosure; and FIG. 13 is a sectional view of the fitting relationship between the insulating member and the support member provided in some other embodiments of the present disclosure. The battery cell 20 also includes an insulating member 27, which is at least partially arranged between the first wall 213 and the electric energy extraction part 24. The insulating member 27 is used for insulating and isolating the first wall 213 and the electric energy extraction part 24, wherein the insulating member 27 includes a third surface 271 facing the first wall 213, with a groove 272 formed on the third surface 271, and at least a part of the support member 26 is accommodated within the groove 272.

As mentioned previously, the material of insulating member 27 can be plastic, such as PP (polypropylene) or PE (polyethylene), which is beneficial for reducing the weight of the battery cell 20 while ensuring insulation effect.

As mentioned earlier, a through hole 274 is generally set at the position corresponding to the pressure relief mechanism 22 of the insulating member 27, which enables the gas inside the battery cell 20 to smoothly reach the pressure relief mechanism 22.

The groove 272 is a part arranged on the insulating member 27 for avoiding the support member 26, and the groove 272 is a concave area formed on the third surface 271 towards the direction away from the first wall 213.

The setting position and form of the groove 272 can correspond to the support member 26, for example, as shown in FIG. 12, based on the implementation form of "the support member 26 is fixed to the first wall 213, the support member 26 includes multiple sub support members 261, and the multiple sub support members 261 are arranged around the pressure relief mechanism 22", the groove 272 can also include multiple sub grooves 2721, along the thickness direction of the first wall 213 (the first direction Z shown in the figure), the multiple sub grooves 2721 are in one-to-one correspondence to the multiple sub support members 261, and one end of each sub support member 261 away from the first wall 213 extends into the corresponding sub groove 2721.

**In** some other embodiments, as shown in FIG. 13, based on the implementation form of "the support member 26 includes a first bottom wall 262 and a first side wall 263, the first bottom wall 262 is arranged oppositely to the pressure relief mechanism 22 along the thickness direction of the first wall 213, a gap is formed between the first bottom wall 262 and the pressure relief mechanism 22, the first side wall 263 is connected to the first bottom wall 262 and the first wall 213, and the exhaust channel 264 is formed on the first side wall 263," the groove 272 corresponds to the support member 26. The inner surface of groove 272 can correspond to the outer surface of support member 26, with the first bottom wall 262 fully extending into groove 272, and at least a portion of the first side wall 263 extending into groove 272.

In some other embodiments, as shown in FIG. 12, the insulating member 27 also includes a fourth surface 273 opposite to the third surface 271 along the thickness direction of the first wall 213 (the first direction Z shown in the figure), that is, the fourth surface 273 faces the electrode assembly 25, and a protruding part 2722 is formed at the position corresponding to the groove 272 on the fourth surface 273. This design allows for effective thinning of the structure outside the groove 272 of the insulating member 27, which effectively reduces the space occupancy rate of insulating member 27, reduces the weight of insulating member 27, and achieves the goal of saving the material of insulating member 27. When the support member 26 is a metal component, an insulating component 2723 is arranged between the support member 26 and the electric energy extraction part 24, as shown in FIGS. 11 and 12, the insulating component 2723 can be integrally formed with the insulating member 27. Of course, in some other embodiments, the insulating component 2723 can also be separated from the insulating member 27.

The support member 26 can abut against the electric energy extraction part 24 through the insulating component 2723 to reduce the shaking of the electrode assembly 25.

The insulating member 27 is used to insulate and isolate the first wall 213 and the electric energy extraction part 24 to avoid short circuits by contact between the first wall 213 and the electric energy extraction part 24. The setting of the groove 272 ensures the insulation effect between the first wall 213 and the electric energy extraction part 24, while avoiding the support member 26 and the insulating member 27 from occupying too much internal space of the battery cell 20, thereby effectively ensuring the energy density of the battery cell 20.

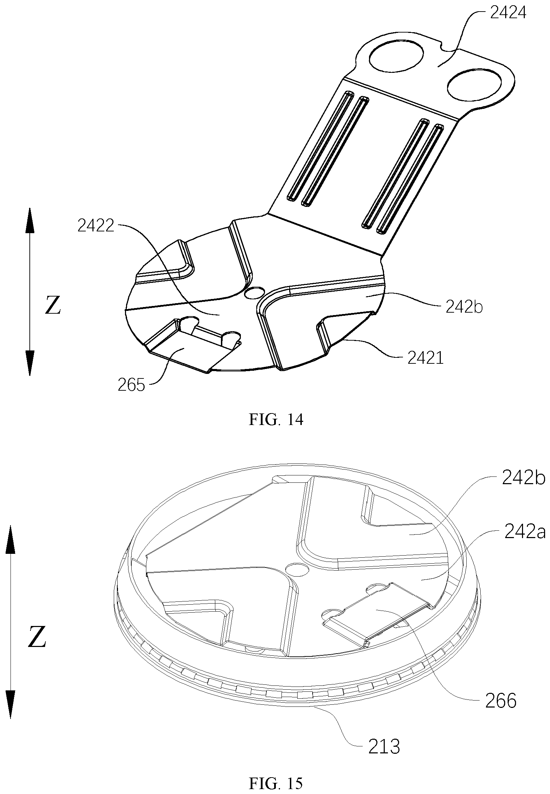

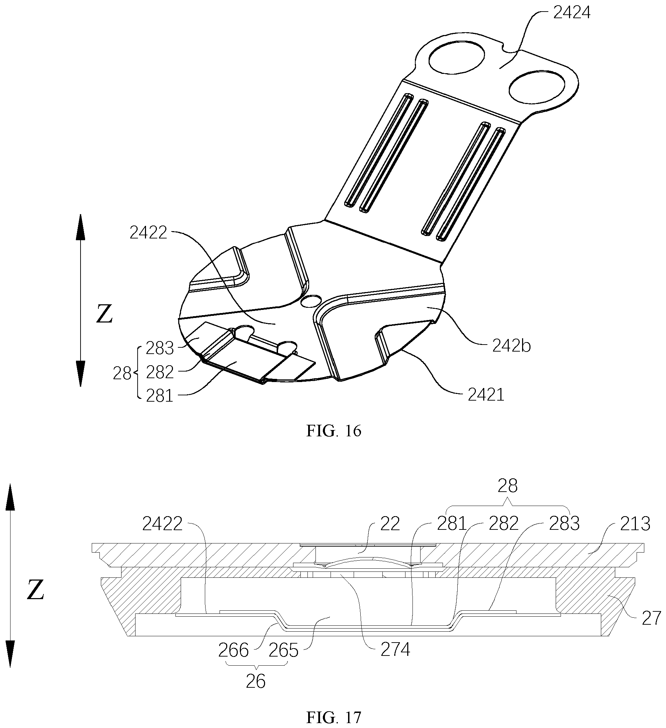

According to some embodiments of the present disclosure, referring to FIGS. 3 to 13 again and further referring to FIGS. 14 to 17, FIG. 14 is a schematic view of the structure of the unfolded adapter provided in some embodiments of the present disclosure; FIG. 15 is an axonometric view of the adapter provided in some embodiments of the present disclosure after being assembled onto the battery cell; FIG. 16 is a schematic view of the fitting structure of the adapter and reinforcer provided in some embodiments of the present disclosure; and FIG. 17 shows the main view of the fitting structure of the adapter and reinforcer provided in some embodiments of the present disclosure. The battery cell 20 also includes an electrode extraction part 23, which is arranged on the first wall 213. The electric energy extraction part 24 includes an adapter 242 and a tab 241. The adapter 242 is arranged between the first wall 213 and the electrode assembly 25, the tab 241 is connected to the electrode assembly 25, and the tab 241 and the electrode extraction part 23 are electrically connected through the adapter 242. The support member 26 is arranged at the adapter 242, and is configured to limit the adapter 242 from blocking the pressure relief hole 221 formed by the pressure relief mechanism 22 when the battery cell 20 undergoes the thermal runaway.

As shown above, the electrode extraction part 23 is a component for extracting the electric energy of the battery cell 20, which is used for electrical connection with adjacent battery cells 20 or other conductive parts. The electrode extraction part 23 can have multiple implementation structures, and for example, the electrode extraction part 23 can be an electrode terminal set on the shell 21, and its structure can be in the form of sheets, columns, etc. For example, the electrode extraction part 23 is an electrode terminal.

The tab 241 can be connected to the electrode assembly 25 through welding, bonding by conductive adhesive, and other methods. The tab 241 can also be an integrated structure with the electrode assembly 25, for example, the part of the electrode plate without the active substance layer forms the tab 241.

The adapter 242 plays an overcurrent and confluence role, and is electrically connected to the tab 241 and the electrode extraction part 23.

The support member 26 is provided on the adapter 242 in various implementation forms. For example, the adapter 242 has a first connection surface facing the first wall 213, and the support member 26 can be a protrusion protruding from the first connection surface. The protrusion can be in an incompletely closed annular structure arranged around the pressure relief mechanism 22. When the adapter 242 moves towards the pressure relief hole 221, one end of the support member 26 that is away from the adapter 242 abuts against the first wall 213, so as to enable the adapter 242 and pressure relief hole 221 to maintain a certain distance in the thickness direction of the first wall 213, thereby achieving the effect of restricting the adapter 242 from blocking the pressure relief hole 221. Moreover, the notch of the incompletely closed annular support member 26 forms a channel for gas to flow, thereby facilitating the normal exhaust of the pressure relief mechanism 22.

The electric energy extraction part includes an adapter 242 and a tab 241. The tab 241 and the electrode assembly 25 can be formed integrally or connected by welding or other methods. The adapter 242 connects the tab 241 and the electrode extraction part 23. When the battery cell 20 experiences thermal runaway, the tab 241 connected to the electrode assembly 25 is prone to deformation due to the impact of high-temperature and high-pressure gas, which drives the adapter 242 to deform and approach the pressure relief mechanism 22 on the first wall 213. The deformed adapter 242 can easily block the pressure relief hole 221 of the pressure relief mechanism 22, thereby causing airflow to be blocked at the pressure relief mechanism 22 and unable to discharge from the battery cell 20 in a timely manner. The support member 26 can limit the adapter 242 from blocking the pressure relief hole 221 of the pressure relief mechanism 22, thereby avoiding the problem of the adapter 242 blocking the pressure relief hole 221 of the pressure relief mechanism 22 due to deformation, effectively ensuring the smoothness and timeliness of exhaust when the battery cell 20 experiences thermal runaway, and reducing the risk of explosion of the battery cell 20, so as to effectively improve the safety performance of battery cells 20. At the same time, the support member 26 is set on the adapter 242. On the one hand, the support member 26 itself can increase the structural strength of the adapter 242, thereby improving the structural strength of the adapter 242 and increasing the difficulty of deformation of the adapter 242 in the event of thermal runaway of the battery cell 20. On the other hand, setting the support member 26 on the adapter 242 can effectively reduce the space occupation rate of the support member 26, which is conducive to improving the safety performance of the battery cell 20 while increasing the energy density of the battery cell 20.

According to some embodiments of the present disclosure, referring to FIGS. 3 and 4, the adapter 242 includes a first connection section 2421 and a second connection section 2424, wherein the first connection section 2421 is connected to the tab 241, the second connection section 2424 is connected to the electrode extraction part 23, and the support member 26 is arranged at the first connection section 2421.

The first connection section and the second connection section 2424 are two parts that constitute the adapter 242, and the first connection section 2421 and the second connection section 2424 can be located at two opposite ends of the adapter 242. The first connection section 2421 and the second connection section 2424 are folded and arranged inside the shell 21.

The adapter 242 includes the first connection section 2421 and the second connection section 2424, wherein the first connection section 2421 is connected to the tab 241. In order to ensure the stability of the connection between the first connection section 2421 and the tab 241, the first connection section 2421 is generally larger, and the projection of the first connection section 2421 on the first wall can cover the pressure relief mechanism 22. In order to reduce weight, the second connection section 2424 is generally smaller, and the second connection section 2424 generally does not cover the pressure relief mechanism 22. When the battery cell 20 experiences thermal runaway, the deformation of the tab 241 will cause the first connection section 2421 to deform and to approach the first wall 213. The deformation of the first connection section 2421 can easily block the pressure relief hole 221 formed by the pressure relief mechanism 22 when the battery cell experiences thermal runaway. Therefore, setting the support member 26 in the first connection section 2421 can effectively increase the deformation difficulty of the first connection section 2421. Moreover, after the deformation of the first connection section 2421 occurs, the support member 26 can directly limit the first connection section 2421 from blocking the pressure relief hole 221.

According to some embodiments of the present disclosure, referring to FIGS. 14 and 15, the first connection section 2421 has a first surface 2422 facing the first wall 213 and a second surface 2423 facing away from the first wall 213. The support member 26 forms a concave part 265 on the first surface 2422, and a convex part 266 at a position corresponding to the concave part 265 on the second surface 2423. Along the thickness direction of the first wall 213, the projection of the concave part 265 on the first wall 213 covers at least a part of the pressure relief mechanism 22.

The first surface 2422 of the first connection section faces the first wall 213, and the concave part 265 is formed on the first surface 2422. Therefore, the opening surface of the concave part 265 faces the first wall 213. When the first connection section 2421 approaches the first wall 213, the structural strength of the support member 26 is higher, and it is less prone to deformation compared to other positions of the first connection section 2421.

The projection of the concave part 265 on the first wall 213 covers at least a part of the pressure relief mechanism 22, which means that the projection of the concave part 265 on the first wall 213 can completely cover the pressure relief mechanism 22 or cover a part of the pressure relief mechanism 22. In this way, when the battery cell experiences thermal runaway, a pressure relief hole 221 is formed at the pressure relief mechanism, and the first connection section 2421 approaches the first wall 213. The concave part 265 of the support member 26 can cover the pressure relief mechanism 22 or at least a part of the pressure relief mechanism 22, and there is a certain space formed between the concave part 265 and the pressure relief mechanism 22 that allows gas to pass through, thereby effectively avoiding the first connection section 2421 from blocking the pressure relief hole 221.

The concave part 265 of the support member 26 can be implemented in various ways, for example, the concave part 265 can extend to the edge of the first connection section 2421, so that gas in the battery cell 20 can enter the concave part 265 through the edge of the first connection section 2421 and be discharged from the pressure relief mechanism 22 covered by the concave part 265. Alternatively, the side walls of the concave part 265 can be provided with channels communicating the internal space of the concave part 265 and the external space of the concave part 265, so that gas inside the battery cell 20 can enter the concave part 265 through the channels and be discharged from the pressure relief mechanism 22.

It can be understood that the support member 26 can be integrally formed with the first connection section 2421 by stamping, and the support member 26 can also be separately arranged and connected with the first connection section 2421 through welding or other methods. For example, the support member 26 can be integrally formed with the first connection section 2421.

The support member 26 is arranged on the first connection section 2421, and a concave part 265 is formed on the first surface 2422 and a convex part 266 is formed on the second surface 2423. The projection of the concave part 265 on the first wall 213 at least partially covers the pressure relief mechanism 22. The support member 26 of this structure effectively improves the structural strength of the first connection section 2421 and increases the deformation difficulty of the first connection section 2421. At the same time, when the first connection section 2421 deforms towards the first wall 213, The concave part 265 on the first connection section 2421 can maintain a certain gap between the pressure relief mechanism 22 and the first connection section 2421, so as to avoid the first connection section 2421 from blocking the pressure relief hole 221, and achieve the goal of ensuring smooth pressure relief of the pressure relief mechanism 22.

According to some embodiments of the present disclosure, as shown in FIG. 14, the concave part 265 extends to the edge of the first connection section 2421.

The concave part 265 extends to the edge of the first connection section 2421, thereby making the space of the concave part 265 directly communicate with the space outside the edge of the first connection section 2421. After the thermal runaway of the battery cell 20 occurs, gas can directly enter the concave part 265 through the edge of the first connection section 2421 and reach the pressure relief mechanism 22, thereby efficiently ensuring the smooth flow of gas.

According to some embodiments of the present disclosure, as shown in FIG. 16, the battery cell 20 further comprises a reinforcer 28, with at least a portion of the reinforcer 28 arranged in the concave part 265.

The reinforcer 28 is used to provide structural support and reinforcement for the support member 26. A portion of the reinforcer 28 is located within the concave part 265, which is beneficial for improving the structural strength and stability of the concave part 265 after the deformation of the first connection section 2421.

There are various implementation forms of the reinforcer 28, which can be a reinforcing wall that is attached and connected to the bottom wall of the concave part 265. The reinforcer 28 can also be an arc-shaped wall embedded in the concave part 265, with both ends of the arc-shaped wall abutting against the two inner side walls of the concave part 265, and the outer peripheral surface of the arc-shaped wall abutting against the bottom wall of the concave part 265.

At least a portion of the reinforcer is arranged in the concave part 265, which can improve the structural strength of the support member 26 and further improve the structural stability after the concave part 265 is subjected to force.

According to some embodiments of the present disclosure, referring to FIGS. 16 and 17, the reinforcer 28 includes a second bottom wall 281 and a second side wall 282, wherein the second bottom wall 281 adheres to the bottom surface of the concave part 265, the second side wall 282 is formed at the edge of the second bottom wall 281, and the second side wall 282 adheres to the side surface of the concave part 265.

The second bottom wall 281 and the second side wall 282 are two components of the reinforcer 28. The second side wall 282 is formed at the edge of the second bottom wall 281, and the second side wall 282 and the second bottom wall 281 can be integrally formed.

The second bottom wall 281 is attached to the bottom surface of the concave part 265, so that the second bottom wall 281 has a larger contact area with the bottom surface of the concave part 265, thereby enabling the second bottom wall 281 to achieve a better strengthening and limiting function for the bottom surface of the concave part 265. The second bottom wall 281 and the bottom surface of the concave part 265 can be welded to ensure a better connection strength between the second bottom wall 281 and the bottom surface of the concave part 265.

The second side wall 282 is attached to the side surface of the concave part 265, so that the second side wall 282 has a larger contact area with the side surface of the concave part 265, thereby enabling the second side wall 282 to achieve a better strengthening and limiting function for the side surface of the concave part 265. The second side wall 282 and the side surface of the concave part 265 can be welded to ensure a better connection strength between the second side wall 282 and the side surface of the concave part 265.

The second bottom wall 281 of the reinforcer 28 is attached to the bottom surface of the concave part 265, and the second side wall 282 of the reinforcer 28 is attached to the side surface of the concave part 265, which enables the reinforcer 28 to provide sufficient profiling support for the concave part 265, thereby effectively improving the overall structural strength of the support member 26, and effectively enhancing the stress stability of the support member 26.

According to some embodiments of the present disclosure, referring to FIGS. 16 and 17, the reinforcer 28 further includes a second flanging part 283, wherein the second flanging part 283 is connected to the second side wall 282, and the second flanging part 283 is located outside the concave part 265 and is attached to the first surface 2422.

The second flanging part is located outside the concave part 265 and is attached to the first surface 2422, thereby ensuring a better connection stability between the reinforcer 28 and the first connection section 2421. The second flanging part 283 can be welded to the first surface 2422 to ensure a better connection strength between the second flanging part 283 and the first connection section 2421.

The design of the second flanging part 283 not only improves the connection stability and stress stability between the reinforcer 28 itself and the first connection section 2421, but also plays a supporting and strengthening role on the first connection section 2421. **In** the event of thermal runaway of the battery cell 20, the reinforcer 28 can further increase the difficulty of deformation of the first connection section 2421 and improve the overall stress stability of the first connection section 2421.

According to some embodiments of the present disclosure, referring to FIG. 15, the first connection section 2421 includes a main body area 242a and a connecting area 242b, the connecting area 242b is connected to the tab 241, and the convex part 266 is formed in the main body area 242a.

The main body area 242a and the connecting area 242b are two areas forming the first connection section 2421. The connecting area 242b is an area used for direct connection with the tab 242. The connecting area 242b can be welded to the tab 242 to ensure the stability of the connection between the first connection section 2421 and the tab 242. The convex part 266 is formed in the main body area 242a by connecting the connecting area 242b with the tab 242, so as to avoid the convex part 266 affecting the connection area between the first connection section 2421 and the tab 242.

According to some embodiments of the present disclosure, the connecting area 242b protrudes from the second surface 2423, and the height of the convex part 266 protruding from the second surface 2423 is less than or equal to the height of the connecting area 242b protruding from the second surface 2423.

The height of the convex part 266 protruding from the second surface 2423 is less than or equal to the height of the connecting area 242b protruding from the second surface 2423. The convex part 266 occupies a less space in the thickness direction (the first direction Z), thereby ensuring the strength of the support member 26 and avoiding affecting the connection between the connecting area 242b and the tab 242.

According to some embodiments of the present disclosure, the present disclosure also provides a battery 100, including the battery cell 20 as described in any one of the above solutions.

According to some embodiments of the present disclosure, the present disclosure also provides an electrical equipment, including a battery 100 mentioned in the above solution, and the battery 100 is used to provide electrical energy.

The electrical equipment can be any of the aforementioned devices or systems that use battery 100.

Referring to FIGS. 3 to 5, and further referring to FIGS. 8 to 12, some embodiments of the present disclosure provide a battery cell 20, which includes a shell 21, an electrode assembly 25, an electrode extraction part 23, an electric energy extraction part 24, a pressure relief mechanism 22, a support member 26, and an insulating member 27. The shell 21 includes a first wall 213, and the pressure relief mechanism 22 and electrode extraction part 23 are both located on the first wall 213. The electrode assembly 25 and the electric energy extraction part 24 are both arranged inside the shell 21. The electric energy extraction part 24 includes a tab 241 and an adapter 242, and the tab 241 is connected to the electrode assembly 25. The adapter 242 includes a first connection section 2421 and a second connection section 2424, wherein the first connection section 2421 is connected to the tab 241 and the second connection section 2424 is connected to the electrode extraction part 23.

The support member 26 is fixed to the first wall 213, and includes two sub support members 261, which are located on two opposite sides of the pressure relief mechanism 22.

The insulating member 27 is arranged between the first wall 213 and the adapter 242 for insulating and isolating the first wall 213 and the electric energy extraction part 24. The insulating member 27 includes a third surface 271 facing the first wall 213, and a groove 272 is formed on the third surface 271. One ends of the two sub support members 261 facing the adapter 242 are accommodated in the groove 272.

The first connection section 2421 is provided with a reinforcing part 243, wherein the projection of the reinforcing part 243 on the first wall 213 overlaps at least partially with the projection of the support member 26 on the first wall 213 along the thickness direction of the first wall 213.

The reinforcing part 243 is a first flanging part 243a connected to the edge of the first connection section 2421. The first connection section 2421 has a first surface 2422 facing the first wall 213 and a second surface 2423 facing away from the first wall 213, and the first flanging part 243a is bent to one side of the first surface 2422.

Referring to FIGS. 3 to 5, and further referring to FIGS. 8 to 12, some embodiments of the present disclosure provide a battery cell 20, which includes a shell 21, an electrode assembly 25, an electrode extraction part 23, an electric energy extraction part 24, a pressure relief mechanism 22, a support member 26, and an insulating member 27. The shell 21 includes a first wall 213, and the pressure relief mechanism 22 and electrode extraction part 23 are both arranged on the first wall 213. The electrode assembly 25 and the electric energy extraction part 24 are both arranged inside the shell 21. The electric energy extraction part 24 includes a tab 241 and an adapter 242, and the tab 241 is connected to the electrode assembly 25. The adapter 242 includes a first connection section 2421 and a second connection section 2424, wherein the first connection section 2421 is connected to the tab 241 and the second connection section 2424 is connected to the electrode extraction part 23.

The support member 26 is fixed to the first wall 213, and includes two sub support members 261, which are located on two opposite sides of the pressure relief mechanism 22.

The insulating member 27 is arranged between the first wall 213 and the adapter 242 for insulating and isolating the first wall 213 and the electric energy extraction part 24. The insulating member 27 includes a third surface 271 facing the first wall 213, and a groove 272 is formed on the third surface 271. One ends of the two sub support members 261 facing the adapter 242 are accommodated in the groove 272.

The first connection section 2421 is provided with a reinforcing part 243, wherein the projection of the reinforcing part 243 on the first wall 213 overlaps at least partially with the projection of the support member 26 on the first wall 213 along the thickness direction of the first wall 213.

The first connection section 2421 has a first surface 2422 facing the first wall 213 and a second surface 2423 facing away from the first wall 213, with the first surface 2422 or second surface 2423 forming a protrusion 243b, which is the reinforcing part 243.

Referring to FIG. 3, and further referring to FIGS. 6, 7 and 13, some embodiments of the present disclosure provide a battery cell 20, which includes a shell 21, an electrode assembly 25, an electrode extraction part 23, an electric energy extraction part 24, a pressure relief mechanism 22, a support member 26, and an insulating member 27. The shell 21 includes a first wall 213, and the pressure relief mechanism 22 and electrode extraction part 23 are both arranged on the first wall 213. The electrode assembly 25 and the electric energy extraction part 24 are both arranged inside the shell 21. The electric energy extraction part 24 includes a tab 241 and an adapter 242, and the tab 241 is connected to the electrode assembly 25. The adapter 242 includes a first connection section 2421 and a second connection section 2424, wherein the first connection section 2421 is connected to the tab 241 and the second connection section 2424 is connected to the electrode extraction part 23.

The support member 26 is fixed to the first wall 213 and covers the pressure relief mechanism 22. The support member 26 includes a first bottom wall 262 and a first side wall 263, wherein the first bottom wall 262 and the pressure relief mechanism 22 are arranged oppositely to each other along the thickness direction of the first wall 213, and a gap is formed between the first bottom wall 262 and the pressure relief mechanism 22. The first side wall 263 connects the first bottom wall 262 and the first wall 213, and the first side wall 263 is provided with an exhaust channel 264.

The insulating member 27 is arranged between the first wall 213 and the adapter 242 for insulating and isolating the first wall 213 and the electric energy extraction part 24. The insulating member 27 includes a third surface 271 facing the first wall 213, and a groove 272 is formed on the third surface 271. One ends of the first bottom wall 262 and the first side wall 263 facing the adapter 242 are accommodated in the groove 272.

Referring to FIG. 3, and further referring to FIGS. 14 to 17, some embodiments of the present disclosure provide a battery cell 20, which includes a shell 21, an electrode assembly 25, an electrode extraction part 23, an electric energy extraction part 24, a pressure relief mechanism 22, an insulating member 27, a support member 26, and an reinforcer 28. The shell 21 includes a first wall 213, and the pressure relief mechanism 22 and electrode extraction part 23 are both arranged on the first wall 213. The electrode assembly 25 and the electric energy extraction part 24 are both arranged inside the shell 21. The electric energy extraction part 24 includes a tab 241 and an adapter 242, and the tab 241 is connected to the electrode assembly 25. The adapter 242 includes a first connection section 2421 and a second connection section 2424, wherein the first connection section 2421 is connected to the tab 241 and the second connection section 2424 is connected to the electrode extraction part 23.

The insulating member 27 is arranged between the first wall 213 and the adapter 242 for insulating and isolating the first wall 213 and the electric energy extraction part 24.

The support member 26 is arranged on the first connection section 2421, which has a first surface 2422 facing the first wall 213 and a second surface 2423 facing away from the first wall 213. The support member 26 forms a concave part 265 on the first surface 2422, and forms a convex part 266 at the position corresponding to the concave part 265 on the second surface 2423. Along the thickness direction of the first wall 213, the projection of the concave part 265 on the first wall 213 covers the pressure relief mechanism 22. The concave part 265 extends to the edge of the first connection section 2421.

The reinforcer 28 includes a second flanging part 283, a second bottom wall 281 and a second side wall 282, wherein the second bottom wall 281 adheres to the bottom surface of the concave part 265, the second side wall 282 is formed at the edge of the second bottom wall 281, and the second side wall 282 adheres to the side surface of the concave part 265. The second flanging part 283 is connected to the second side wall 282, and the second flanging part 283 is located outside the concave part 265 and is attached to the first surface 2422.

It should be noted that in the absence of conflicts, the features in the embodiments in the present disclosure can be combined with each other.

Although the present disclosure has been described with reference to preferred embodiments, various improvements can be made thereto and components therein can be replaced with equivalents without departing from the scope of the present disclosure. Especially, as long as there is no structural conflict, the various technical features mentioned in various embodiments can be combined in any way. The present disclosure is not limited to the specific embodiments disclosed in the text, but includes all technical solutions falling within the scope of the claims.

## Claims

1. A battery cell, comprising:
a shell, comprising a first wall;
an electrode assembly, arranged inside the shell;
an electric energy extraction part, arranged inside the shell and connected to the electrode assembly;
a pressure relief mechanism, arranged on the first wall; and
a support member, arranged inside the shell, wherein the support member is configured to limit the electric energy extraction part from blocking a pressure relief hole formed by the pressure relief mechanism when the battery cell undergoes a thermal runaway.

2. The battery cell according to claim 1, wherein a melting point of the support member is higher than 200 °C.

3. The battery cell according to claim 1 or 2, wherein the support member is a metal component.

4. The battery cell according to any one of claims 1 to 3, wherein the battery cell further comprises:
an insulating member, at least partially arranged between the first wall and the electric energy extraction part and configured to insulate and isolate the first wall and the electric energy extraction part, wherein
a melting point of the support member is higher than that of the insulating member, and the support member is configured to limit the electric energy extraction part from blocking the pressure relief hole formed by the pressure relief mechanism when the battery cell undergoes the thermal runaway after the insulating member melts.

5. The battery cell according to any one of claims 1 to 4, wherein the support member is fixed to the first wall.

6. The battery cell according to claim 5, wherein the support member and the first wall are integrally formed.

7. The battery cell according to any one of claims 1 to 6, wherein the support member is arranged around the pressure relief mechanism.

8. The battery cell according to claim 7, wherein the support member comprises multiple sub support members, wherein the multiple sub support members are arranged around the pressure relief mechanism.

9. The battery cell according to any one of claims 1 to 8, wherein the support member is covered on the pressure relief mechanism, and the support member has an exhaust channel communicating an internal space of the support member with an external space of the support member.

10. The battery cell according to claim 9, wherein the support member comprises a first bottom wall and a first side wall, wherein the first bottom wall and the pressure relief mechanism are arranged oppositely to each other along a thickness direction of the first wall; a gap is formed between the first bottom wall and the pressure relief mechanism; the first side wall connects the first bottom wall and the first wall; and the exhaust channel is formed on the first side wall.

11. The battery cell according to any one of claims 1 to 10, wherein the battery cell further comprises:
an electrode extraction part, arranged on the first wall, wherein
the electric energy extraction part comprises an adapter and a tab, wherein the tab is connected to the electrode assembly; the adapter is arranged between the first wall and the tab; the tab and the electrode extraction part are electrically connected through the adapter; and the support member is configured to limit the adapter from blocking the pressure relief hole formed by the pressure relief mechanism when the battery cell undergoes the thermal runaway.

12. The battery cell according to claim 11, wherein the adapter comprises a reinforcing part, wherein a projection of the reinforcing part on the first wall overlaps at least partially with a projection of the support member on the first wall along a thickness direction of the first wall.

13. The battery cell according to claim 12, wherein the adapter comprises a first connection section and a second connection section, wherein the first connection section is connected to the tab, the second connection section is electrically connected to the electrode extraction part, and the reinforcing part is arranged at the first connection section.

14. The battery cell according to claim 13, wherein the reinforcing part is a first flanging part connected to an edge of the first connection section, wherein the first connection section has a first surface facing the first wall and a second surface facing away from the first wall, and the first flanging part is bent to one side of the first surface or to one side of the second surface.

15. The battery cell according to claim 13, wherein the first connection section has a first surface facing the first wall and a second surface facing away from the first wall, with the first surface or the second surface forming a protrusion, wherein the protrusion is the reinforcing part.

16. The battery cell according to any one of claims 13 to 15, wherein the reinforcing part is located on a side of the first connection section facing the first wall.

17. The battery cell according to any one of claims 1 to 16, wherein the battery cell further comprises:
an insulating member, at least partially arranged between the first wall and the electric energy extraction part and configured to insulate and isolate the first wall and the electric energy extraction part, wherein
the insulating member comprises a third surface facing the first wall, wherein a groove is formed on the third surface, and at least a part of the support member is accommodated within the groove.

18. The battery cell according to any one of claims 1 to 4, wherein the battery cell further comprises:
an electrode extraction part, arranged on the first wall, wherein
the electric energy extraction part comprises an adapter and a tab, wherein the tab is connected to the electrode assembly; the adapter is arranged between the first wall and the tab; the tab and the electrode extraction part are electrically connected through the adapter; and
the support member is arranged on the adapter; and the support member is configured to limit the adapter from blocking the pressure relief hole formed by the pressure relief mechanism when the battery cell undergoes the thermal runaway.

19. The battery cell according to claim 18, wherein the adapter comprises a first connection section and a second connection section, wherein the first connection section is connected to the tab, the second connection section is connected to the electrode extraction part, and the support member is arranged at the first connection section.

20. The battery cell according to claim 19, wherein the first connection section has a first surface facing the first wall and a second surface facing away from the first wall, wherein the support member forms a concave part on the first surface, and a convex part at a position corresponding to the concave part on the second surface; and along a thickness direction of the first wall, a projection of the concave part on the first wall covers at least a part of the pressure relief mechanism.

21. The battery cell according to claim 20, wherein the concave part extends to an edge of the first connection section.

22. The battery cell according to claim 20 or 21, wherein the battery cell further comprises:
a reinforcer, with at least a part of the reinforcer arranged in the concave part.

23. The battery cell according to claim 22, wherein the reinforcer comprises a second bottom wall and a second side wall, wherein the second bottom wall is attached to a bottom surface of the concave part, the second side wall is formed at an edge of the second bottom wall, and the second side wall is attached to a side surface of the concave part.

24. The battery cell according to claim 23, wherein the reinforcer further comprises a second flanging part, wherein the second flanging part is connected to the second side wall, and the second flanging part is located outside the concave part and is attached to the first surface.

25. The battery cell according to any one of claims 20 to 24, wherein the first connection section comprises a main body area and a connecting area, wherein the connecting area is connected to the tab; the convex part is formed at the main body area; the connecting area protrudes from the second surface; and a height of the convex part protruding from the second surface is less than or equal to a height of the connecting area protruding from the second surface.

26. A battery, comprising: a box and the battery cell according to any one of claims 1 to 25, wherein the battery cell is accommodated in the box.

27. An electrical equipment, comprising the battery cell according to any one of claims 1 to 25, wherein the battery cell is configured to provide an electric energy.
